# EUROPÄISCHE PATENTSCHRIFT

(11) **EP 0 615 406 B1**
(45) Veröffentlichungstag und Bekanntmachung des Hinweises auf die Patenterteilung: **12.08.1998**
(21) Anmeldenummer: 92923596.8
(22) Anmeldetag: 30.11.1992
(51) Int. Cl.: A01K 5/02, A01K 39/01

(54) **VERFAHREN UND VORRICHTUNGEN ZUM VERSORGEN VON TIEREN MIT FUTTER**
PROCESS AND DEVICES FOR PROVIDING ANIMALS WITH FODDER
PROCEDE ET DISPOSITIF D'APPROVISIONNEMENT D'ANIMAUX EN FORAGE

(30) Priorität: 29.11.1991 AT 2382/91; 29.11.1991 AT 2383/91; 28.08.1992 AT 1729/92
(43) Veröffentlichungstag der Anmeldung: 21.09.1994
(73) Patentinhaber: STEINER, Johann, A-5122 Hochburg (AT)
(72) Erfinder: STEINER, Johann, A-5122 Hochburg (AT)
(74) Vertreter: Berger, Erhard, Dr.
(86) Internationale Anmeldenummer: AT9200157
(87) Internationale Veröffentlichungsnummer: WO9310659

(56) Entgegenhaltungen:
- EP-A- 0 035 827
- EP-A- 0 285 596
- DD-A- 269 773
- DE-A- 3 637 408
- FR-A- 2 320 697
- FR-A- 2 605 844
- GB-A- 908 255
- NL-A- 8 802 368
- US-A- 3 174 651
- US-A- 3 184 108
- US-A- 3 502 053
- US-A- 4 117 954
- US-A- 4 712 511

## Beschreibung

Die Erfindung betrifft die Versorgung von Tieren mit Futter. Tierfutter wird meist als Mischfutter an die Tiere verfüttert. Dabei werden aus einzelnen Futterkomponenten zubereitete Futtermittelmischungen verwendet, deren Zusammensetzung jeweils auf den jeweiligen Verwendungszweck, wie die Fütterung von Geflügel, Schweinen, Rindern etc. bzw. die Fütterung von Jungtieren, Masttieren, Muttertieren, Küken, Junghennen, Legehennen, Zuchthennen etc. abgestimmt sind.

Aus der US-PS 4 355 596 ist es bekannt, in mehreren nebeneinanderliegenden Käfigbatterien untergebrachtes Geflügel aus einem Silo mit Fertigfutter zu versorgen, wobei jeweils eine Käfigbatterie nach der anderen mit Futter versorgt wird. Die Käfigbatterien bestehen jeweils aus zwei übereinanderliegenden Etagen mit jeweils zwei nebeneinanderliegenden Käfigreihen. Entlang den Käfigreihen ist jeweils eine zu den Freßplätzen der Tiere führende Futterabgabevorrichtung angeordnet, welche als Futterbahn mit eigenen Förderorganen und eigenem Antrieb ausgebildet ist. Das Futter wird von einem an den Vorratssilo anschließenden Schneckenförderer über einen ersten Zwischenbehälter einer Futterverteilungseinrichtung zugeführt. Diese besteht aus einem vom ersten Zwischenbehälter ausgehenden Zufuhrstrang, welcher mit allen Futterabgabevorrichtungen aller Käfigbatterien über einzelne, jeweils vom Zufuhrstrang abzweigende Fallrohre verbunden ist, welche ihrerseits in einen Zwischenbehälter münden, der der jeweiligen Futterabgabevorrichtung vorgelagert ist. Der Zufuhrstrang mündet in einen Umkehrbehälter, von welchem ein Rückführstrang zurück zum ersten Zwischenbehälter führt. Wahrend der aufeinanderfolgenden Fütterung in allen Käfigbatterien wird das Futter in der Futterverteilungseinrichtung vom ersten Zwischenbehälter weg durch den Zufuhrstrang, an allen Fallrohren vorbei, in den Umkehrbehälter und von dort durch den Rückführstrang wieder zurück zum ersten Zwischenbehälter in einem Kreislauf gefördert, wobei die gesamte Futterverteilungseinrichtung bis in die Fallrohre und bis in die, den Futterabgabevorrichtungen jeweils vorgeschalteten weiteren Zwischenbehälter hinein immer mit Futter gefüllt ist. Bei der Fütterung in einer einzelnen Käfigbatterie wird jeweils nur von den, über eine Steuereinrichtung in Gang gesetzten vier Futterabgabevorrichtungen dieser einen Käfigbatterie Futter aus dem Zufuhrstrang über die Fallrohre und die weiteren Zwischenbehältern entnommen. Das Futter wird von den vier Futterabgabevorrichtungen dieser Käfigbatterie zu den einzelnen Freßplätzen der Käfige befördert, bis ein in der jeweiligen Futterbahn angeordneter Futterniveausensor über die Steuereinrichtung den Antrieb der Futterbahn stillsetzt. Erst wenn alle vier Futterbahnen dieser Käfigbatterie bis zu dem jeweils von den Futterniveausensoren vorgegebenen Niveau angefüllt sind und die Antriebe aller vier Futterbahnen stillgesetzt wurden, werden die Antriebe der Futterbahnen der nächsten Käfigbatterie in Gang gesetzt und die Futterzufuhr zu den Freßplätzen dieser Käfigbatterie beginnt. Die Förderkapazität der Futterverteilungseinrichtung entspricht der Förderkapazität der vier Futterbahnen einer einzelnen Käfigbatterie.

Derartige Anlagen haben den Nachteil, daß die Abgabe von für die Tiere abgestimmten Futtermengen nicht möglich ist, weil das Futter nur zu den Freßplätzen transportiert, nicht aber auf den tatsächlichen Futterbedarf der Tiere dosiert wird. Ein weiterer Nachteil liegt in der großen Anzahl von mit Futter gefüllten Stauräumen in den Fallrohren und diversen Zwischenbehältern, in denen das Futter bis zur nächsten Fütterung liegen und hängen bleibt und aus denen das Futter oft erst nach Tagen mit deutlich verminderter Qualität zu den Tieren gelangt.

Aus der DD-PS 269 773 ist es bekannt, eine Futterdosiervorrichtung zwischen einer Futterverteilschnecke und den Futterbahnen einer mehrlagigen Käfigbatterie anzuordnen. Die Futterdosiervorrichtung besitzt Dosierbehälter, die am Anfang der Futterbahnen in einem Tragrahmen starr übereinander angeordnet sind und deren Gewicht samt Füllung und Tragrahmen über einen Kraftaufnehmer aus der Vertikalverschiebung dieses Tragrahmens gegenüber einem äußeren Führungsrahmen bestimmt wird. Befüllt werden die Dosierbehälter von der Futterverteilschnecke aus über Futterausläufe, die mit elektromotorisch bewegten Schiebern oder elektromagnetischen Klappen verschließbar sind, und über an die Futterausläufe anschließende Fallschächte, die in die Dosierbehälter münden. Die einer Futterbahn zuzuführende Futtermenge wird dadurch dosiert, daß der dem jeweiligen Dosierbehälter zugeordnete Futterauslauf geöffnet und erst wieder geschlossen wird, nachdem die, aus Tragrahmen und Dosierbehälter gebildete Einheit die gewünschte Gewichtszunahme erreicht hat.

Nachteilig ist auch hier die große Anzahl von Stauräumen in denen Futter liegen bleiben kann, besonders bei Futter mit höherer Feuchtigkeit. Ein weiterer Nachteil liegt darin, daß das Futter für jede Futterbahn in einem eigenen Dosierbehälter dosiert wird, sodaß für jede Futterbahn ein eigener Dosierbehälter erforderlich ist.

Aus der DE-OS 36 37 408 ist das Verfüttern von Mischfutter bekannt, das aus Futterkomponenten zusammengemischt wird, deren jede von einem Komponenten-Vorratssilo durch den Stall hindurch zu allen Futterabgabevorrichtungen und wieder zurück zum Komponenten-Vorratssilo im Kreis transportiert wird. Für jede Futterabgabevorrichtung ist ein eigener Mischerförderer vorgesehen, der die Futterkomponenten miteinander vermischt und an die jeweilige Futterabgabevorrichtung weitergibt. Jede Futterkomponente gelangt aus ihrem Futterkomponentensilo in eine Futterentnahmeeinrichtung, die unterhalb des jeweiligen Silos angeordnet ist und die von einem, im Stall im Kreis geführten umlaufenden Komponentenförderer durchlaufen wird, der die jeweilige Futterkomponente aus der Futterentnahmeeinrichtung am Anfang des Kreislaufes austrägt und am Ende des Kreislaufes wieder einträgt.

Aus der FR-A-2605884 ist ein an der Oberseite einer 3-etagigen, zwei spiegelbildliche Hälften aufweisenden Käfigbatterie in Längsrichtung verfahrbarer Futterwagen bekannt, der mit seinen spiegelbildlich ausgebildeten Wagenhälften jeweils über die Käfige einer Batteriehälfte seitlich vorsteht. In jeder Wagenhälfte wird das in einer Vorratskammer gelagerte Futter über eine Förderschnecke zu einer nach oben offenen Sammelwanne transportiert, aus der drei Dosierschnecken Futter entnehmen und jeweils einem, in einen Futtertrog der betreffenden Batteriehälfte mündenden Fallrohr zuführen, aus dem das für das Fallrohr dosierte Futter austritt und erst durch die Vorwärtsbewegung des fahrenden Futterwagens für den Futtertrog dosiert und auf dessen Freßplätze verteilt wird. Dieser fahrbare Futterwagen bildet einen Zwischenbehälter für das Futter und enthält eine große Anzahl von Stauräumen in denen Futter liegen bleiben kann. Dies ist besonders bei Futter mit höherer Feuchtigkeit von Nachteil.

Die bekannten Fütterungsanlagen sind nur für Tierfutter mit sehr geringer Feuchtigkeit verwendbar nicht aber für Futter mit höherer Feuchtigkeit.

Hühnerfertigfutter z.B. besteht zum Großteil (40% bis 60%) aus Körnermais. Körnermais weist zum Zeitpunkt der Ernte eine Feuchtigkeit von 30% bis 40% auf. Mit dieser Feuchtigkeit ist er normalerweise nicht lagerfähig, die Körner würden verpilzen und wären zur Futtererzeugung wertlos. Die Maiskörner werden daher üblicherweise nach der Ernte sofort auf einen Feuchtigkeitsgehalt von 14% getrocknet, um eine qualitativ hochwertige Futtergrundlage zu garantieren. Diese Trocknung der Maiskörner stellt eine erhebliche Kostenbelastung für das Futter dar. Um diese Kosten einzusparen, kann man Körnermais nach der Ernte, ohne vorhergehende Trocknung, in gasdichten Behältern lagern. Durch diese Art der Lagerung ist der Mais nicht nur vor Verpilzung geschützt, sondern seine Qualität verbessert sich durch die konservierende Wirkung der Milchsäurebakterien. Bei so (gasdicht) eingelagertem Mais spricht man von Ganzkornsilage. Verwendet man Ganzkornsilage, so erreicht man damit einerseits eine preisgünstige Futtergrundlage, weil die für die Maistrocknung erforderliche Energie und Kosten eingespart werden, und anderseits eine qualitative Aufwertung des Körnermaises.

Leider konnte man diese Vorteile bisher nur wenig nutzen, da Ganzkornsilage, außerhalb des gasdichten Lagerbehälters relativ schnell von Pilzen befallen wird, gerade in den vielen Stauräumen, in denen das Futter gerade bei höherer Feuchtigkeit oft hängen bleibt.

Aus der US-PS 4,712,511 ist eine Anlage für eine diskontinuierlich ablaufende Einzelversorgung der Freßplätze eines Stalles mit in Menge und Zusammensetzung von Freßplatz zu Freßplatz variablen Futterchargen bekannt, die in Abhängigkeit von einer programmierbaren Steuerung getrennt von einander in einzelnen, jeweils einem bestimmten Freßplatz zugeordneten Transportbehältern aus einzelnen, bereits abgemessenen Futterkomponentenmengen zubereitet werden. Die Transportbehälter werden nacheinander entlang den Freßplätzen des Stalles und entlang den Futterkomponenten-Vorratsbehältern im Kreislauf befördert, wobei jeder Transportbehälter nur bei jenen Vorratsbehältern beschickt wird, deren Futterkomponente für die im Transportbehälter zuzubereitende Futtercharge bestimmt ist. Bei jeder Beschickung wird eine, dem Anteil an der Futtercharge entsprechende Menge der jeweiligen Futterkomponente aus dem betreffenden Vorratsbehälter entnommen und in den Transportbehälter eingebracht, wobei das Entnehmen der Futterkomponente auf die Dauer der Anwesenheit des Transportbehälters beim betreffenden Vorratsbehälter beschränkt ist. In jedem an den einzelnen Vorratsbehältern vorbeibewegten Transportbehälter wird jeweils der in ihn bereits eingebrachte Anteil der Futtercharge bis zum Einbringen des nächsten Anteiles der Futtercharge zwischengelagert. Nach dem Einbringen des letzten Anteiles der Futtercharge wird die vollständige Futtercharge auf dem Weg zum zugeordneten Freßplatz im Transportbehälter zwischengelagert und der Transportbehälter am Freßplatz entleert. Diese chargenweise durchgeführte Einzelversorgung der Freßplätze läßt keine kontinuierliche Versorgung der Freßplätze mit kontinuierlich zubereitetem Futter zu.

Weiters sind Rohrfördereinrichtung für den Transport von körnigem Gut mit einem, gegebenenfalls flexiblen Förderrohr bekannt, in welchem eine mit einem gegebenenfalls regelbaren Antrieb verbundene Förderschnecke oder Förderspirale umläuft. Rohrfördereinrichtungen dieser Art werden in Tierfütterungsanlagen für den Transport von Körnerfutter vom Vorratssilo zu den Futterplätzen und anderen Futterverteileinrichtungen verwendet. Die Rohrfördereinrichtungen entnehmen jeweils das zu transportierende körnige Gut mit ihren Förderschnecken bzw. Förderspiralen direkt aus einem am Kopfende der Rohrfördereinrichtung angeordneten Vorrats- oder Zwischenbehälter und transportieren es weiter. Dabei bleibt der Füllstand in den Förderrohren weitgehend gleich, bis das Füllstandsniveau im jeweiligen Vorrats- oder Zwischenbehälter unter ein bestimmtes Mindestniveau absinkt. Bis dahin bleibt auch die Förderleistung der Rohrfördereinrichtung weitgehend gleich. Anschließend sinkt der Füllstand im Förderrohr und die Förderleistung nimmt ab. Dies ist vor allem bei mit Dosierschnecken bzw. Dosierspiralen versehenen Rohrfördereinrichtungen von Nachteil, weil dadurch die Dosiergenauigkeit sehr stark beeinflußt wird.

Eine Aufgabe der Erfindung ist es, eine qualitäts- und tiergerechte Verfütterung von Tierfutter, auch von Trockenfutter mit höherem Feuchtigkeitsgehalt zu ermöglichen. Eine weitere Aufgabe der Erfindung ist es, Verfahren für eine qualitäts- und tiergerechte Verfütterung von Tierfutter anzugeben, welche auch die Verfütterung von Trockenfutter mit höherem Feuchtigkeitsgehalt ermöglichen. Eine weitere Aufgabe der Erfindung ist es, Tierfütterungsanlagen für eine qualitäts- und tiergerechte Verfütterung von Tierfutter anzugeben, welche auch die Verfütterung von Trockenfutter mit höherem Feuchtigkeitsgehalt ermöglichen.

Gemäß einem Aspekt der Erfindung wird dies bei einem Verfahren zum Versorgen von Tieren mit Futter, bei welchem das Futter zumindest einem stationären Futtersilo oder mehreren stationären Futterkomponentensilos entnommen und mittels einer stationären Hauptfördereinrichtung zu den Freßplätzen der Tiere transportiert wird, erfindungsgemäß dadurch erreicht, daß für eine Fütterung das Futter im Anfangsabschnitt der stationären Hauptfördereinrichtung oder jede Futterkomponente in einer, der stationären Hauptfördereinrichtung vorgelagerten stationären Komponentenfördereinrichtung auf eine, auf den Futterbedarf aller zu versorgender Tiere abgestimmte Menge dosiert und ohne Zwischenlagerung zu den einzelnen Freßplätzen transportiert wird.

Eine Variante des erfindungsgemäßen Verfahrens sieht vor, daß die Futterkomponenten jeweils zuerst in ihren Komponentenfördereinrichtungen entsprechend ihrem Anteil am Futter einzeln dosiert, dann der Hauptfördereinrichtung zugeführt und in dieser zum Futter vermischt werden.

Eine weitere Variante des erfindungsgemäßen Verfahrens sieht vor, daß jede Futterkomponente bereits am Beginn der eigenen Komponentenfördereinrichtung dosiert wird.

Eine weitere Variante des erfindungsgemäßen Verfahrens sieht vor, daß jede zu bearbeitende bzw. zu verarbeitende Futterkomponente bereits fertig dosiert einer, der jeweiligen Komponentenfördereinrichtung vorgelagerten Bearbeitungsmaschine bzw. Verarbeitungsmaschine zugeführt wird.

Eine weitere Variante des erfindungsgemäßen Verfahrens sieht vor, daß jede Futterkomponente nach dem Dosieren gewogen wird.

Eine weitere Variante des erfindungsgemäßen Verfahrens sieht vor, jede Futterkomponente während des Dosierens gewogen wird.

Eine weitere Variante des erfindungsgemäßen Verfahrens sieht vor, die bereits dosierte Futterkomponente während des Weitertransportes gewogen wird.

Eine weitere Variante des erfindungsgemäßen Verfahrens sieht vor, daß das Futter am Beginn einer der stationären Hauptfördereinrichtung nachgeordneten, entlang der Freßplätze der Tiere verlaufenden, stationären Futterbahn auf die, der jeweiligen Futterbahn zuzuführende Menge dosiert wird.

Eine weitere Variante des erfindungsgemäßen Verfahrens sieht vor, daß das Futter in der Hauptfördereinrichtung auf die, der jeweiligen Futterbahn zuzuführende Menge dosiert wird.

Eine weitere Variante des erfindungsgemäßen Verfahrens sieht vor, daß das Futter am Beginn der Futterbahn durch Verändern der Fördergeschwindigkeit der Hauptfördereinrichtung auf die, der jeweiligen Futterbahn zuzuführende Menge dosiert wird.

Eine weitere Variante des erfindungsgemäßen Verfahrens sieht vor, daß das Futter bereits am Beginn der Hauptfördereinrichtung auf die, der jeweiligen Futterbahn zuzuführende Menge dosiert wird.

Eine weitere Variante des erfindungsgemäßen Verfahrens sieht vor, daß das Futter in der jeweiligen Futterbahn durch Änderung der Fördergeschwindigkeit der Futterbahn dem jeweiligen Futterbedarf der Tiere dieser Futterbahn entsprechend dosiert wird.

Eine weitere Variante des erfindungsgemäßen Verfahrens sieht vor, daß das Futter nach dem Dosieren gewogen wird.

Eine weitere Variante des erfindungsgemäßen Verfahrens sieht vor, daß das Futter während des Dosierens gewogen wird.

Eine weitere Variante des erfindungsgemäßen Verfahrens sieht vor, daß das bereits dosierte Futter während des Weitertransportes gewogen wird.

Eine weitere Variante des erfindungsgemäßen Verfahrens sieht vor, daß das Futter bzw. die jeweilige Futterkomponente erst dann an eine nachgeordnete Fördereinrichtung weitergegeben wird, wenn deren Futterförderorgan in Bewegung gesetzt wurde. Auf diese Weise wird jede Zwischenlagerung oder ein Liegenbleiben des Futters am Beginn einer Fördereinrichtung vermieden.

Um den am Ende einer Futterbahn gelegenen Freßplätzen im wesentlichen die gleiche Futtermenge zuzuführen, wie den am Beginn der Futterbahn gelegenen Freßplätzen, wird erfindungsgemäß vorgeschlagen, daß einer Futterbahn von der für diese Futterbahn bereits dosierten Futtermenge zu Beginn der Fütterung ein größerer Anteil zugeführt wird als gegen Ende der Fütterung. Dabei kann die pro Zeiteinheit der Futterbahn zugeführte Futtermenge erfindungsgemäß vom Beginn der Fütterung bis zum Ende der Fütterung allmählich oder stufenweise verringert werden.

Weiters kann, um den am Ende einer Futterbahn gelegenen Freßplätzen im wesentlichen die gleiche Futtermenge zuzuführen, wie den am Beginn der Futterbahn gelegenen Freßplätzen, erfindungsgemäß vorgesehen sein, daß in einer Futterbahn zu Beginn der Fütterung eine größere Futtermenge weitertransportiert wird als gegen Ende der Fütterung. Dabei kann die in einer Futterbahn weitertransportierte Futtermenge vom Beginn der Fütterung bis zum Ende der Fütterung allmählich oder stufenweise verringert werden.

Eine weitere Variante des erfindungsgemäßen Verfahrens sieht vor, daß nach einer Fütterung das von den Tieren nicht aufgenommene und in der Futterbahn liegende Futter nach einer Pause mindestens noch einmal weitertransportiert wird. Dabei wird nach der Fütterung, während der die auf den Futterbedarf je Freßplatz abgestimmte Futtermenge der Futterbahn zugeführt wurde, das bei einzelnen Freßplätzen in der Futterbahn liegen gebliebene Futter auf die übrigen Freßplätze der Futterbahn verteilt.

Eine weitere Variante des erfindungsgemäßen Verfahrens sieht vor, daß nach der Fütterung das Futterförderorgan der Futterbahn zur Verteilung des in der Futterbahn liegenden Futters noch mehrmals, jeweils nach einer Pause weiterlaufen gelassen wird.

Mit diesen Verfahren kann das Futter für jede einzelne Futterabgabevorrichtung bzw. für jede einzelne Futterbahn getrennt und tiergerecht dosiert den Freßplätzen zugeführt werden, ohne daß es zu einer deutlichen Qualitätsverminderung des Futters kommt, welche bei während des Transportes liegen oder hängen gebliebenem Futter, das erst zu einem viel späteren Zeitpunkt am Freßplatz ankommt, oder bei einem sehr lange dauernden Transport des Futters bis zum Freßplatz eintritt. Das erfindungsgemäße Verfahren ermöglicht es, Pilzbefall und somit einen Qualitätsverlust bei der Verfütterung von Ganzkornsilage zu vermeiden und nur die zur täglichen Tierfütterung benötigte Maismenge aus dem Silo zu entnehmen. Mit den erfindungsgemäßen Verfahren kann das jeweils zur Fütterung zu den Freßplätzen transportierte Futter jeweils frisch dosiert, oder frisch aus den Futterkomponenten zusammengemischt und dosiert werden. Die erfindungsgemäßen Verfahren erlauben es, die Dosierung des Futters oder das Verhältnis der Futterkomponenten zueinander für jede Fütterung und für jede Futterabgabevorrichtung neu einzustellen.

Gemäß einem weiteren Aspekt der Erfindung ist eine Tierfütterungsanlage zur Durchführung der erfindungsgemäßen Verfahren vorgesehen, bei welcher zumindest eine von einem stationären Futtersilo ausgehende, stationäre Hauptfördereinrichtung vorgesehen ist, welche das Futter über Fallrohre an Futterbahnen abgibt, welche entlang den Freßplätzen der Tiere verlaufen und als Futterfördereinrichtungen mit eigenen Förderorganen und eigenen Antrieben ausgebildet sind und das Futter zu den Freßplätzen transportieren, wobei für die Hauptfördereinrichtung und die Futterbahnen eine gemeinsame Steuereinrichtung vorgesehen ist. Diese Tierfütterungsanlage ist erfindungsgemäß dadurch gekennzeichnet, daß die Hauptfördereinrichtung mit Absperrvorrichtungen für die Fallrohre versehen ist und zumindest in ihrem Anfangsabschnitt als Dosiereinrichtung zum Dosieren einer, auf den Futterbedarf aller zu versorgenden Tiere abgestimmten Menge ausgebildet ist und daß zum Dosieren der jeweils einer Futterbahn pro Fütterung zuzuführenden Futtermenge der Antrieb der Hauptfördereinrichtung und die Antriebe der Absperrvorrichtungen mit der Steuereinrichtung verbunden sind, welche eine Eingabevorrichtung für die bei der Fütterung zu berücksichtigenden Parameter besitzt.

Gemäß einem weiteren Merkmal der Erfindung kann ein Abschnitt der Hauptfördereinrichtung zum permanenten Verwiegen der von der Hauptfördereinrichtung transportierten Futtermenge mit einer, mit der Steuereinrichtung verbundenen Wiegeeinrichtung versehen sein. Dabei kann erfindungsgemäß der als Dosiereinrichtung ausgebildete Abschnitt der Hauptfördereinrichtung mit der Wiegeeinrichtung versehen sein.

Gemäß einem weiteren Merkmal der Erfindung kann die Steuereinrichtung programmierbar sein.

Gemäß einem weiteren Merkmal der Erfindung kann die Hauptfördereinrichtung als stationäre Rohrfördereinrichtung mit regelbarer Fördergeschwindigkeit für das zu transportierende Futter ausgebildet sein, wobei entlang der Rohrfördereinrichtung in die Fallrohre mündende, durch die Absperrvorrichtungen verschließbare Futterablauföffnungen vorgesehen sind und die Steuereinrichtung mit den Antrieben der Absperrvorrichtungen zum Öffnen und Schließen der Futterablauföffnungen und mit dem Antrieb der Rohrfördereinrichtung zum Regeln der Fördergeschwindigkeit verbunden ist.

Gemäß einem weiteren Merkmal der Erfindung kann die Rohrfördereinrichtung zumindest eine Dosierschnecke bzw. Dosierspirale mit regelbarer Drehzahl enthalten. An diese Dosierschnecke bzw. Dosierspirale mit regelbarer Drehzahl kann sich dann eine Rohrfördereinrichtung mit konstanter Fördergeschwindigkeit anschließen.

Gemäß einem weiteren Aspekt der Erfindung ist eine Tierfütterungsanlage zur Durchführung der erfindungsgemäßen Verfahren vorgesehen, bei welcher zumindest eine von einem stationären Futtersilo ausgehende, stationäre Hauptfördereinrichtung vorgesehen ist, welche das Futter über Fallrohre an stationäre, das Futter zu den Freßplätzen transportierende Futterbahnen abgibt, welche entlang den Freßplätzen der Tiere verlaufen und als stationäre Futterfördereinrichtungen mit eigenen Förderorganen und eigenen Antrieben ausgebildet sind, wobei für die stationäre Hauptfördereinrichtung und die stationären Futterbahnen eine gemeinsame Steuereinrichtung vorgesehen ist. Diese Tierfütterungsanlage ist erfindungsgemäß dadurch gekennzeichnet, daß die stationäre Hauptfördereinrichtung mit Absperrvorrichtungen für die Fallrohre versehen ist und zumindest in ihrem Anfangsabschnitt als Dosiereinrichtung zum Dosieren einer, auf den Futterbedarf aller zu vorsorgenden Tiere abgestimmten Menge ausgebildet ist, daß die stationären Futterbahnen als Dosiereinrichtungen ausgebildet sind, und daß zum Dosieren der jeweils in einer Futterbahn jedem Freßplatz zuzuführenden Futtermenge der Antrieb der Hauptfördereinrichtung und die Antriebe der Absperrvorrichtungen und die Antriebe der Futterbahnen mit der Steuereinrichtung verbunden sind.

Erfindungsgemäß kann die Steuereinrichtung programmierbar sein. Weiters kann die Steuereinrichtung eine Eingabevorrichtung für die bei der Fütterung zu berücksichtigenden Parameter besitzen. Alternativ kann die Steuereinrichtung einen PC für die Eingabe der bei der Fütterung zu berücksichtigenden Parameter besitzen.

Ein weiteres Merkmal der Erfindung sieht vor, daß die Hauptfördereinrichtung als stationäre Rohrfördereinrichtung mit konstanter Fördergeschwindigkeit für das zu transportierende Futter ausgebildet ist, daß entlang der Rohrfördereinrichtung in die Fallrohre mündende und durch die Absperrvorrichtungen verschließbare Futterablauföffnungen vorgesehen sind, und daß die Steuereinrichtung mit den Antrieben der Absperrvorrichtungen zum Öffnen und Schließen der Futterablauföffnungen und mit den Antrieben der Futterbahnen zum Regeln der in der jeweiligen Futterbahn zu den Freßplätzen zu transportierenden Futtermenge verbunden ist.

Gemäß einem weiteren Aspekt der Erfindung ist eine Tierfütterungsanlage zur Durchführung der erfindungsgemäßen Verfahren vorgesehen, bei welcher eine das Futter zu den Freßplätzen transportierende Fördereinrichtung vorgesehen ist, welche zumindest zwei, jeweils von einem stationären Futterkomponentensilo ausgehende stationäre Komponentenförderer und zumindest einen die Futterkomponenten miteinander vermischenden stationären Futterförderer umfaßt, der zu einer das Futter an die einzelnen Freßplätze verteilenden Futterabgabevorrichtung führt. Diese Tierfütterungsanlage ist erfindungsgemäß dadurch gekennzeichnet, daß jeder Komponentenförderer als Dosiereinrichtung zum kontinuierlichen Dosieren der dem Futterförderer für jede Fütterung jeweils zuzuführenden Futterkomponentenmenge ausgebildet ist, daß der Futterförderer als stationäre Hauptfördereinrichtung ausgebildet ist, welche mit allen Futterabgabevorrichtungen jeweils über eine, durch eine Absperrvorrichtung verschließbare Futterablauföffnung verbunden ist, und daß zum Dosieren der jeweils einer Futterabgabevorrichtung pro Fütterung zuzuführenden Futtermenge die Antriebe der Komponentenförderer und der Antrieb der Hauptfördereinrichtung sowie jeder Antrieb jeder Absperrvorrichtung mit einer Steuereinrichtung verbunden sind.

Gemäß einem weiteren Merkmal der Erfindung kann die Hauptfördereinrichtung einen Abschnitt besitzen, der zum permanenten Verwiegen der von der Hauptfördereinrichtung transportierten Futtermenge mit einer, mit der Steuereinrichtung verbundenen Wiegeeinrichtung versehen ist. Dabei kann erfindungsgemäß ein als Dosiereinrichtung ausgebildeter Abschnitt der Hauptfördereinrichtung mit der Wiegeeinrichtung versehen sein.

Gemäß einem weiteren Merkmal der Erfindung kann jede Komponentenfördereinrichtung einen Abschnitt besitzen, der mit einer, mit der Steuereinrichtung verbundenen Wiegeeinrichtung zum permanenten Verwiegen der von der Komponentenfördereinrichtung transportierten Futtermenge versehen ist.

Gemäß einem weiteren Merkmal der Erfindung kann ein als Dosiereinrichtung ausgebildeter Abschnitt der Komponentenfördereinrichtung mit der Wiegeeinrichtung versehen sein.

Erfindungsgemäß kann die Steuereinrichtung programmierbar sein. Weiters kann die Steuereinrichtung eine Eingabevorrichtung für die bei der Fütterung zu berücksichtigenden Parameter besitzen. Alternativ kann die Steuereinrichtung einen PC für die Eingabe der bei der Fütterung zu berücksichtigenden Parameter besitzen.

Gemäß einem weiteren Merkmal der Erfindung können die Komponentenförderer als stationäre Rohrfördereinrichtungen mit regelbarer Fördergeschwindigkeit ausgebildet sein und die Steuereinrichtung zum Dosieren der der Hauptfördereinrichtung zuzuführenden Komponentenmenge eine Geschwindigkeitsregelung für jeden Komponentenrohrförderer umfassen, wobei das Mengenverhältnis der Futterkomponenten zueinander durch die Steuereinrichtung einstellbar ist.

Gemäß einem weiteren Merkmal der Erfindung kann zum Verarbeiten einer Futterkomponente dem jeweiligen stationäre Komponentenförderer eine Verarbeitungsmaschine nachgeordnet sein, deren Durchflußmenge von der Steuereinrichtung über die Geschwindigkeitsregelung für den Komponentenförderer regelbar ist.

Erfindungsgemäß kann jeder Komponentenförderer zumindest eine Dosierschnecke bzw. Dosierspirale mit regelbarer Drehzahl enthalten.

Gemäß einem weiteren Merkmal der Erfindung können die Futterabgabevorrichtungen als mit eigenen Förderorganen und eigenen Antrieben versehene Futterbahnen ausgebildet sein, die entlang den Freßplätzen verlaufen und deren Antriebe zum Dosieren der jeweils in einer Futterbahn jedem Freßplatz zuzuführenden Futtermenge mit der Steuereinrichtung verbunden sind.

Gemäß einem weiteren Merkmal der Erfindung kann die Hauptfördereinrichtung von ihren Futterablauföffnungen ausgehende Fallrohre besitzen, die direkt und unmittelbar oberhalb der Förderorgane der Futterbahnen in die Futterbahnen münden, wobei die Futterabgabe aus der Hauptfördereinrichtung nur bei laufender Futterbahn erfolgt.

Gemäß einem weiteren Merkmal der Erfindung können in den Futterbahnen mit der Steuereinrichtung verbundene Futterniveausensoren vorgesehen sein und die Steuereinrichtung eine Zeitsteuerung besitzen, welche bei der jeweiligen Futterbahn die Futterabgabe aus der Hauptfördereinrichtung bei sich bewegendem Futterförderorgan der Futterbahn bis zum Absinken des Futterniveaus unter das vom Futterniveausensor vorgesehene Niveau verzögert.

Gemäß einem weiteren Merkmal der Erfindung kann die Steuereinrichtung zur besseren Versorgung der vom Fallrohr weiter entfernten Bereiche einer Futterbahn mit einer Zeitsteuerung versehen sein, welche bei gleichbleibender der Futterbahn zugeteilter Futtermenge die Futterzufuhr zur Futterbahn zu Beginn der Fütterung erhöht und gegen Ende der Fütterung absenkt.

Gemäß einem weiteren Merkmal der Erfindung kann die Futterabgabevorrichtung als an der Futterablauföffnung anschließendes, mit zumindest einem beweglichen Abschnitt versehenes, über den Freßplätzen automatisch bewegbares Futterablaufrohr ausgebildet sein.

Gemäß einem weiteren Merkmal der Erfindung kann das Futterablaufrohr zwei ineinanderschiebbare Rohrstutzen besitzt, von denen der eine als Auslaufstutzen ausgebildet ist.

Gemäß einem weiteren Merkmal der Erfindung kann zum Anpassen der jeweils dosierten Futtermengen an den sich bei Temperaturschwankungen verändernden Futterbedarf der Tiere ein Temperaturfühler mit der Steuereinrichtung verbunden sein.

Unter Fütterung wird in der vorliegenden Erfindung jener Zeitraum verstanden, während dem das Tierfutter bzw. die Tierfutterkomponenten von den jeweiligen Lagersilos weg durch die Hauptfördereinrichtung bis zu den Futterabgabevorrichtungen transportiert wird. Während dieses Zeitraumes wird das Futter dosiert oder die einzelnen Futterkomponenten dosiert und zum Futter vermischt. Die Fütterung bezieht sich nur auf das Zubereiten, Mischen, Bearbeiten, Dosieren und Transportieren des Futters bis in die Futterabgabevorrichtungen an den Freßplätzen, nicht aber auf den daran anschließenden Zeitraum, während dem die Tiere das Futter aufnehmen bzw. fressen. An jede Fütterung schließt ein Zeitraum an, während dem kein weiteres Futter mehr durch die Hauptfördereinrichtung zu den Futterabgabevorrichtungen transportiert wird. Während dieses an die Fütterung anschließenden Zeitraumes kann das in den Futterabgabevorrichtungen vorhandene und von den Tieren noch nicht aufgenommene bzw. noch nicht gefressene Futter innerhalb der Futterbahnen ein oder mehrmals weitertransportiert bzw. umverteilt werden. Für diesen Weitertransport bzw. diese Umverteilung, ist die Steuereinrichtung mit einer Zeitsteuerung versehen, wobei die Zeit des Weitertransportes, die Länge der dazwischenliegenden Pausen und die Anzahl der Intervalle über die Eingabevorrichtung bzw. einem PC eingegeben werden können. Diese Intervalle werden vorzugsweise so gewählt, daß die jeweilige Futterabgabevorrichtung (Futtertröge) nach dem letzten Intervall leergefressen ist.

Die Steuereinrichtung kann mit programmierbaren Zeitsteuerungen und programmierbaren Reglern versehen sein.

Nachstehend wird die Erfindung anhand von, in den Zeichnungen dargestellten Ausführungsbeispielen von Tierfütterungsanlagen näher erläutert. In den Zeichnungen zeigen:
- Fig. 1: schematisch eine Tierfütterungsanlage für einen Hühnerstall, zum Verfüttern von, aus zwei Komponenten zusammenzusetzendem Mischfutter,
- Fig. 2: schematisch eine Tierfütterungsanlage für einen Hühnerstall, dem das Tierfutter aus einem einzigen Futtervorratssilo zugeführt wird,

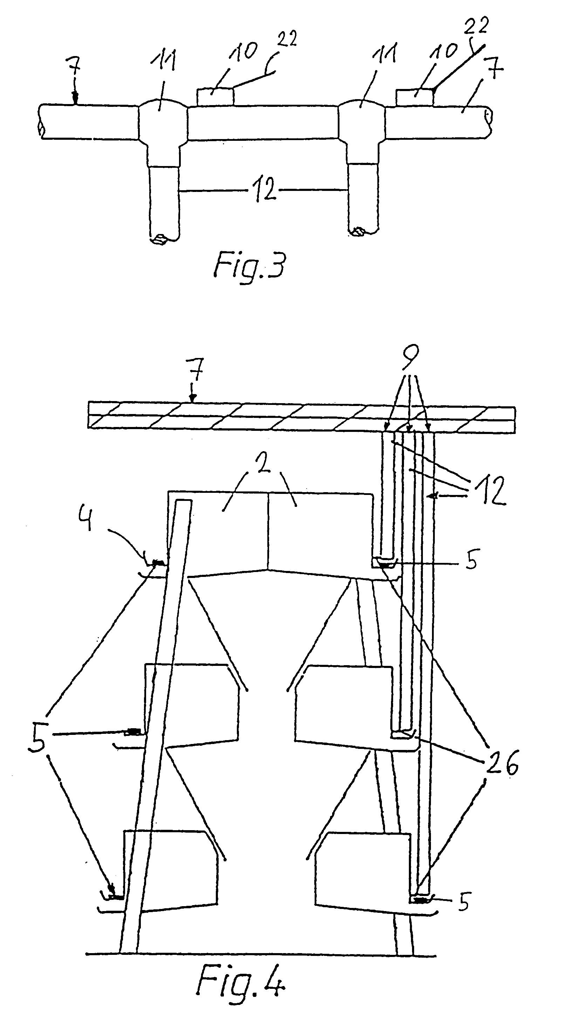

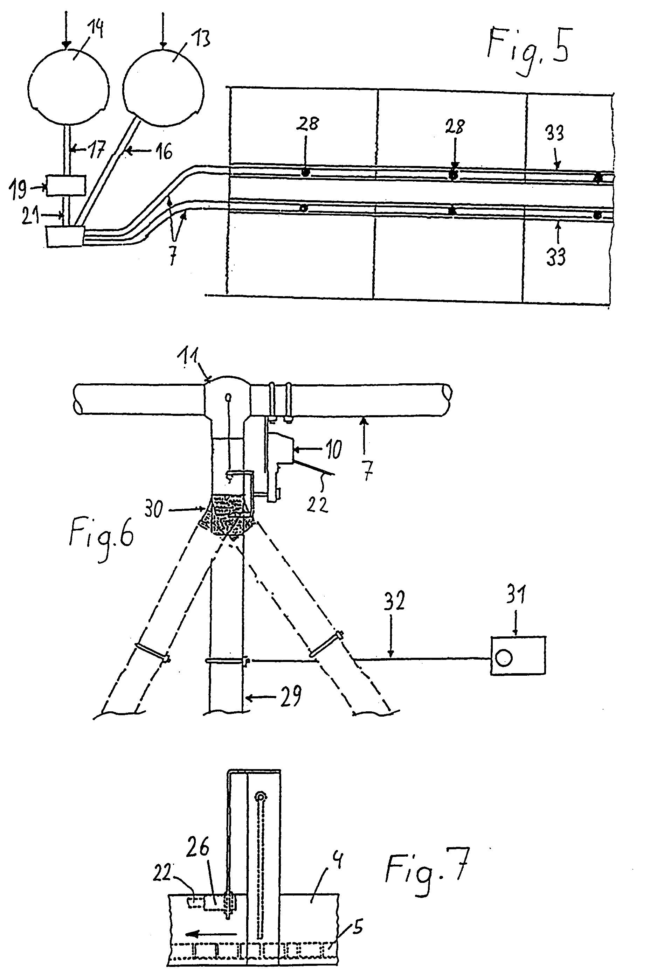

- Fig. 3: schematisch die in die Hauptfördereinrichtung eingesetzten Absperrvorrichtungen für die Fallrohre,
- Fig. 4: die in die Futterbahnen direkt einmündenen Fallrohre,
- Fig. 5: schematisch eine weitere Ausführungsform einer Tierfütterungsanlage mit mehreren Futterabgabevorrichtungen,
- Fig. 6: schematisch eine Futterabgabevorrichtung der Fig.5,
- Fig. 7: einen in einer Futterbahn angeordneten Niveausensor,
- Fig. 8: schematisch eine Rohrfördereinrichtung für eine Tierfütterungsanlage,
- Fig. 9: einen Schnitt durch das Förderrohr einer Rohrfördereinrichtung mit aufgebautem Füllstandsmelder,
- Fig. 10: ein Förderrohr mit einer Förderschnecke,
- Fig. 11: ein Förderrohr mit einer Förderspirale,
- Fig. 12: eine weitere Ausführungsform einer Futterabgabevorrichtung,
- Fig. 13: schematisch eine Draufsicht auf eine Futterbahn,
- Fig. 14: schematisch eine Ausführungsform einer mit einer Wiegeeinrichtung versehenen Hauptfördereinrichtung,
- Fig. 15: schematisch eine weitere Ausführungsform einer mit einer Wiegeeinrichtung versehenen Hauptfördereinrichtung, und
- Fig. 16: schematisch eine weiter Ausführungsform einer mit einer Wiegeeinrichtung versehenen Hauptfördereinrichtung.

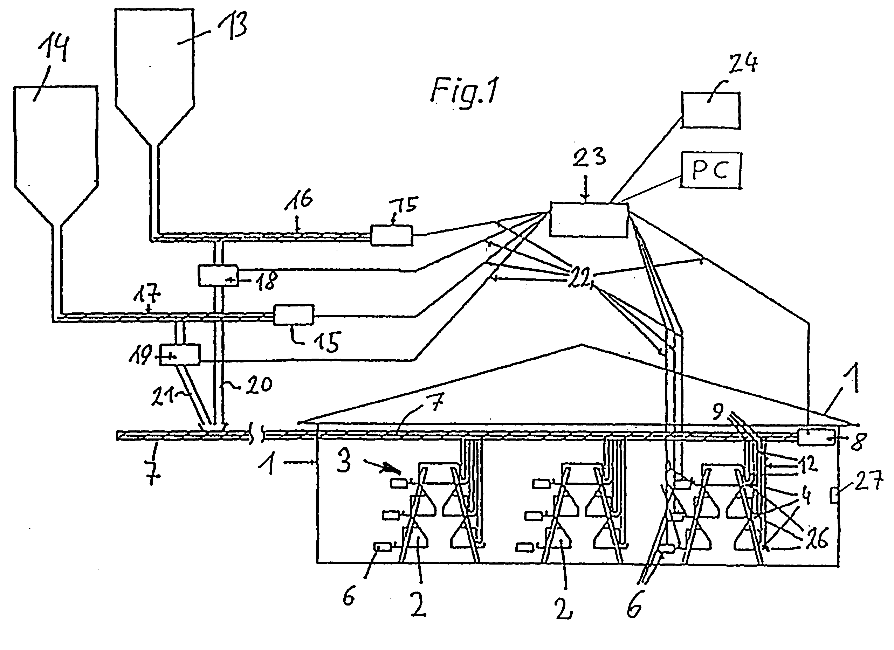

Fig. 1 zeigt schematisch einen Hühnerstall mit einem Stallgebäude 1, in dem Tierkäfige 2 in übereinanderliegenden Käfigetagen zu je zwei Käfigreihen und in drei Gestellreihen nebeneinander angeordnet sind. An den Tierkäfigen 2 jeder Käfigetage führt, an den jeweils nach außen weisenden Freßplätzen eine in sich geschlossene Futterbahn 3 vorbei, die aus einem rund um die beiden Käfigreihen einer Käfigetage verlaufenden Futtertrog 4, einem in diesem angeordneten endlosen Futterförderorgan 5 und einem Antrieb 6 für das Futterförderorgan 5 besteht. Weiters ist eine in den Stall 1 führende Hauptfördereinrichtung vorgesehen, welche als Rohrförderer 7 ausgebildet ist und einen Antrieb 8 besitzt. Die Hauptfördereinrichtung 7 besitzt entlang ihres im Stall 1 verlaufenden Rohrstranges für jede Käfigetage eine eigene Futterablauföffnung 9. Die Futterablauföffnungen 9 können jeweils durch eine, von einem Antrieb 10 betätigbaren Absperrvorrichtung 11, beispielsweise einer Futterablaufklappe, versperrt werden und münden jeweils in ein Fallrohr 12, welches seinerseits in einer Futterbahn 3 im Futtertrog 4 direkt über dem Futterförderorgan 5 der Käfigetage mündet. Das zu verfütternde Futter besteht aus zwei Futterkomponenten, welche aus den Futterkomponentensilos 13 und 14 entnommen und über, von Antrieben 15 angetriebene, Komponentenförderer 16 und 17 mit regelbarer Fördergeschwindigkeit zuerst dosiert und dann jeweils einer Verarbeitungsmaschine 18 und 19 zugeführt werden, von der sie jeweils über ein Fallrohr 20 und 21 dem Rohrförderer 7 der Hauptfördereinrichtung zugeführt und in diesem miteinander vermischt werden. Die Antriebe 6, 8, 10 und 15 der Futterbahnen 3, des Rohrförderers 7, der Absperrvorrichtungen 11, der Komponentenförderer 16 und 17 und der Verarbeitungsmaschinen 18 und 19 sind über Steuerleitungen 22 mit einer programmierbaren Steuereinrichtung 23 verbunden, welche eine Eingabevorrichtung 24 und/oder einen Personal-Computer (PC) für die bei der Fütterung zu berücksichtigenden Parameter, eine Geschwindigkeitsregelung für die Fördergeschwindigkeit der Komponentenförderer 16 und 17 zum Dosieren der bei einer Fütterung der jeweiligen Futterbahn 3 zuzuteilenden Futtermenge und eine Zeitsteuerung für jede Absperrvorrichtung 11 einer Futterablauföffnung 9 umfaßt. Die Komponentenförderer 16 und 17 sind vorzugsweise als Dosierschnecken oder Dosierspiralen mit regelbarer Drehzahl ausgebildet.

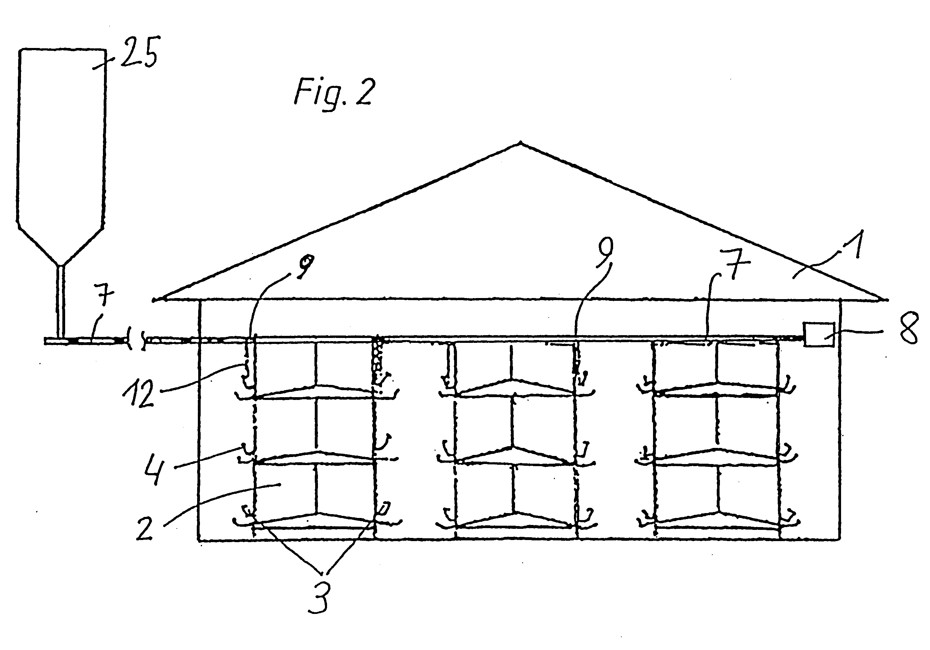

Fig. 2 zeigt eine Tierfütterungsanlage ähnlich der der Fig. 1 mit dem Unterschied, daß das fertige zu verfütternde Futter in einem einzigen Futtervorratssilo 25 gelagert wird und aus diesem direkt der Hauptfördereinrichtung 7 zugeführt wird, welche als Rohrförderer mit regelbarer Fördergeschwindigkeit, vorzugsweise als Dosierschnecke oder Dosierspirale, ausgebildet ist und das Futter für jede Fütterung und für jede Futterbahn 3 getrennt dosiert. Weiters kann sich eine Transportschnecke oder Transportspirale mit konstanter Fördergeschwindigkeit an die Dosierschnecke bzw. Dosierspirale mit regelbarer Drehzahl anschließen. Diese Transportschnecke bzw. Dosierspirale befördert dann die von der Dosierschnecke bzw. Transportspirale bereits dosierte Futtermenge weiter zur jeweiligen Futterbahn.

Die Futterbahnen 3 sind mit einem, im Futtertrog 4 oberhalb des Futterförderorganes 5 angeordneten und mit der Steuereinrichtung 23 verbundenen Futterniveausensor 26 versehen, welcher bei Überschreiten eines vorgegebenen Futterniveaus ein Signal an die Steuereinrichtung 23 abgibt, worauf diese die Futterzufuhr von der Hauptfördereinrichtung 7 zur Futterbahn 3 stoppt oder verringert und erst wieder nach Absetzen des Signales des Futterniveausensors 26 aufnimmt oder wieder erhöht. Diese Futterniveausensoren 26 sind auch eine Sicherheitseinrichtung für den Fall, daß die Tiere aus unvorhersehbaren Gründen weniger Futter aufnehmen.

Die programmierbare Steuereinrichtung 23 ist mit einer Eingabevorrichtung 24 und/oder einem PC für die bei der Fütterung zu berücksichtigenden Parameter verbunden, welche dem Tierhalter folgende Einstellungen ermöglicht:
a) Fütterungszeit, wann am Tag gefüttert werden soll
b) Fütterungsanzahl, wie oft pro Tag gefüttert werden soll
c) Laufzeit der Futterförderorgane 5
d) Anzahl der Tiere pro Käfigetage und Käfigreihe oder pro Tierabteil
e) Futtermenge pro Tier und Tag
f) Prüfgewichte
g) Schlupfkorrektur in %; das ist die %-tuelle Erhöhung der zu Beginn der Fütterung an eine Futterbahn 3 zugeführten bzw. in der Futterbahn 3 weitertransportierten Futtermenge gegenüber der am Ende der Fütterung zugeführten bzw. in der Futterbahn 3 weitertransportierten Futtermenge, wobei aber die insgesamt der Futterbahn 3 zugeteilte und dosierte Futtermenge gleichbleibt.
h) die einzelnen Komponenten
i) der Anteil der einzelnen Futterkomponenten am Fertigfutter in % für ein aus mehreren Komponenten zusammenzumischendes Futter
j) Mengenkorrektur bei Temperaturschwankungen

Bei der Tierfütterungsanlage der Fig. 2 entnimmt die Hauptfördereinrichtung 7 das zu verfütternde Futter direkt dem Futtervorratssilo 25 dosiert es und gibt es an die Futterbahnen 3 weiter.

Bei der Tierfütterungsanlage der Fig. 1 wird das Tierfutter aus mehreren Komponenten zusammengestellt und die in den Komponentensilos 13, 14 lagernden Komponenten von den Komponentenförderern 16, 17 dosiert und in dem von der Steuereinheit 23 gewünschten Verhältnis an die Hauptfördereinrichtung 7 abgegeben. Die Anzahl der Futterkomponenten ist nicht begrenzt.

Die programmierbare Steuereinrichtung 23 steuert die pro Zeiteinheit zu transportierende Fördermenge der in der Hauptfördereinrichtung 7 vorgesehenen Futterdosierschnecke oder Futterdosierspirale (Fig.2) bzw., bei aus mehreren Komponenten zusammenzustellendem Futter (Fig.1), die pro Zeiteinheit zu transportierende Fördermenge der in den Komponentenförderern 17, 18 vorgesehenen Komponentendosierschnecken oder Komponentendosierspiralen, sowie die pro Zeiteinheit vom Förderorgan 5 der Futterbahnen 3 zu transportierende Futtermenge und das separate Öffnen und Schließen jeder einzelnen Futterablauföffnung 9 durch die Absperrvorrichtung 11 bzw. Futterablaufklappe und gegebenenfalls die Komponentenverarbeitungs- oder Komponentenbearbeitungsmaschinen 18, 19 gemäß einem vorgegebenen Programm.

Zur Ermittlung der Prüfgewichte der als Dosiereinrichtung ausgebildeten Hauptfördereinrichtung bzw. der als Dosiereinrichtung ausgebildeten Komponentenfördereinrichtungen stehen zwei verschiedene Varianten zur Verfügung.
1.) Automatisch: (mit Hilfe der Steuereinheit 23)
   Die Futterdosierschnecken oder Futterdosierspiralen bzw. Komponentendosierschnecken oder Komponentendosierspiralen werden mit separaten Ablaufklappen versehen. Diese werden von der Steuereinheit 23 automatisch geöffnet. In weiterer Folge füllt die jeweilige Dosierschnecke bzw. Dosierspirale einen Behälter, welcher mit einem Wiegestab verbunden ist. Dieser Wiegestab gibt die ermittelten Gewichtswerte an die Steuereinheit 23 weiter. Die Steuereinheit 23 errechnet sich daraus das Gewicht pro Umdrehung der Schnecke oder Spirale oder pro Zeiteinheit. Der Wiegebehälter ist mit einer automatischen Auslauföffnung ausgeführt, von der er das verwogene Futter oder die verwogene Futterkomponente einer Fördereinrichtung übergibt, welche das Medium in den Entnahmebehälter rückfördert. Auf diese Weise werden alle Futterkomponenten verwogen.
2.) Manuell:
   Es wird von einer Futterdosierschnecke oder Futterdosierspirale bzw. Komponentendosierschnecke oder Komponentendosierspirale in einer gewissen Zeiteinheit Futter in einen Behälter gefördert. Dieser Behälter wird anschließend gewogen und das Nettogewicht über die Eingabevorrichtung 24 der Steuereinheit 23 übermittelt. Es müssen wieder alle verwendeten Komponenten verwogen und die ermittelten Gewichte der Steuereinheit 23 eingegeben werden. Verändert sich das spezifische Gewicht einer Komponente, so muß von dieser erneut das Gewicht der pro Zeiteinheit oder pro Umdrehung zu transportierenden Menge ermittelt werden und in der Steuereinheit 23 korrigiert werden.

Die von Punkt a) bis j) gewünschten Daten müssen der Steuereinheit 23 über die Eingabevorrichtung 24 bzw. den PC eingegeben werden. Sie können für jede Käfigetage individuell sein.

Jede Käfigetage und die zugehörige Futterablauföffnung 9 mit der zugehörigen Absperrvorrichtung 11 sind unter verschiedenen Nummern, der Anzahl der in einem Stallgebäude 1 effektiv vorhandenen Käfigetagen entsprechend, in der Steuereinheit 23 oder im PC gespeichert.

### Ablauf der Fütterung:

1) Die erste Futterablauföffnung 9 wird über die zugeordnete Absperrvorrichtung 11 geöffnet. Alle anderen Futterablauföffnungen 9 bleiben verschlossen.
2) Die Hauptfördereinrichtung 7 wird eingeschaltet.
3) Wenn die Hauptfördereinrichtung 7 bis zur geöffneten Futterablauföffnung 9 gefüllt ist, wird das entsprechende Futterförderorgan 5 der Futterbahn 3 zugeschaltet. Die Steuereinheit 23 regelt aufgrund der eingegebenen Daten, betreffend dieser Käfigetage, die durch die Hauptfördereinrichtung 7 auf das laufende Förderorgan 5 abzugebende Futtermenge.
4) Ist die vorgegebene Futtermenge, in der vorgesehenen Zeit an die Futterbahn dieser Käfigetage abgegeben, stoppt die Hauptfördereinrichtung 7.
5) Die geöffnete Futterablauföffnung 9 wird geschlossen.
6) Die nächste Futterablauföffnung 9 wird geöffnet.
7) Die Hauptfördereinrichtung 7 schaltet sich erneut ein.
8) Ist die Hauptfördereinrichtung 7 bis zur geöffneten Futterablauföffnung 9 gefüllt, wird das Futterförderorgan 5 der der entsprechenden Käfigetage zugeordneten Futterbahn 3 eingeschaltet und wiederum die auf das laufende Förderorgan 5 von der Hauptfördereinrichtung 7 abzugebende Futtermenge, anhand der vom Tierhalter über die Eingabevorrichtung 24 der Steuereinheit 23 eingegebenen Daten, errechnet und an die Futterbahn 3 abgegeben.

Diese Vorgänge wiederholen sich von Käfigetage zu Käfigetage bis die Fütterung im ganzen Stall 1 abgeschlossen ist.

Bei der Fütterung in der letzten Käfigetage werden bei der Tierfütterungsanlage der Fig. 1 die der Hauptfördereinrichtung vorgeschalteten Komponentenförderer 16, 17 von der Steuereinheit 23 entsprechend früher abgeschaltet, damit sich die Hauptfördereinrichtung am Ende der Fütterung entleeren kann.

Bei der Tierfütterungsanlage gemäß Fig. 2 kann das Futter, daß sich zwischen der ersten und der letzten Futterablauföffnung befindet durch Wechsel der Förderrichtung, z.B. durch Drehrichtungswechsel der Dosierschnecke bzw. Dosierspirale der Rohrfördereinrichtung 7 entleert werden. Es ist dafür ein Ausgleichsbehälter vor dem Entnahmesilo 25 zu installieren. Eine weitere Möglichkeit besteht darin, daß die letzte in der Hauptfördereinrichtung befindliche Futterablauföffnung 9 als erstes geöffnet wird. Da die erste in der Hauptfördereinrichtung angebrachte Futterablauföffnung 9 nach der letzten Futterablauföffnung geöffnet wird, muß die Futtermenge die sich in der Haupttördereinrichtung auf dieser Distanz befindet berücksichtigt werden. Dies geschieht dadurch, daß die erste Futterablauföffnung 9 geöffnet und die letzte Futterablauföffnung 9 erst geschlossen wird, wenn die Hauptfördereinrichtung auf der dazwischenliegenden Distanz völlig entleert ist.

Die Steuereinheit 23 registriert und speichert den Futterverbrauch jeder Käfigetage pro Tag, sowie den Verbrauch über die gesamte Haltungsdauer der Tiere. Der Gesamtverbrauch der Tierherde kann abgefragt werden. Ebenso wird der Verbrauch der einzelnen Futterkomponenten abgespeichert.

Alle Daten können von der Steuereinheit über die Eingabevorrichtung 24 oder einen PC oder einen Drucker abgefragt werden.

### Schlupfkorrektur:

Das Futterförderorgan 5 kann nicht alle in einer Käfigetage gehaltenen Tiere gleichzeitig mit frischem Futter versorgen, sondern die Tiere am Ende des Futtertroges 4 bzw. der Futterbahn 3, erhalten erst zum Schluß frisches Futter. Die Tiere, deren Freßplätze sich am Beginn einer Futterbahn 3 befinden, können hingegen bereits während der Futterzufuhr Futter aus dem Futtertrog 4 entnehmen. Es entsteht daher dann, wenn während der Fütterung die Mengenzufuhr zum Futterförderorgan 5 gleichbleibt, ein mengenmäßiger Nachteil für die Tiere am Ende des Futterförderorganes 5. Um dies auszugleichen wird durch die Schlupfkorrektur zu Beginn der Fütterung mehr Futter auf das Futterförderorgan abgegeben und am Ende der Fütterung entsprechend weniger. Dies errechnet sich die Steuereinheit nach vorhergehender prozentueller Eingabe der Schlupfkorrektur. Eine weitere Möglichkeit zur Schlupfkorrektur besteht in der Änderung der Fördermenge des Futterförderorganes 5 einer Futterbahn 3 während der Futterzufuhr zur Futterbahn 3, um die zu Beginn der Fütterung in der Futterbahn 3 weitertransportierte Futtermenge gegenüber der am Ende der Fütterung weitertransportierten Futtermenge zu erhöhen. Zu diesem Zweck wird, beispielsweise bei einer als Trogkettenförderer ausgebildeten Futterbahn 3, die Laufgeschwindigkeit der Förderkette zu Beginn der Fütterung verringert, um die von der Förderkette mitgenommene Futtermenge zu erhöhen, und gegen Ende der Fütterung erhöht, um die von der Förderkette mitgenommene Futtermenge zu verringern.

### Temperaturüberwachung:

Es ist bekannt, daß sich der Futterbedarf pro Tier, bei Temperaturschwankungen im Stallgebäude 1 verändert. Um die benötigte Futtermenge pro Tier entsprechend der jeweiligen Raumtemperatur anzupassen, wird erfindungsgemäß vorgeschlagen, daß Temperaturfühler 27 im Stallgebäude 1 installiert und mit der Steuereinrichtung 23 verbunden werden. Entsprechend dem Korrekturfaktor, welcher über die Eingabevorrichtung 24 der Steuereinrichtung 23 eingegeben wurde, wird die Tagesfuttermenge errechnet.

### Versorgung von Geflügel in Bodenhaltung:

Auch bei dieser Haltungsform besteht die Möglichkeit, die vorliegende Erfindung anzuwenden. Werden für den Futtertransport Futterketten oder Futterspiralen verwendet, wie sie auch in der Käfighaltung bekannt sind, so ist der Programmablauf ähnlich der vorher beschriebenen Fütterung von Geflügel in Käfigen. Erfolgt die Futterzuteilung über Futterpfannen, so erfolgt die Abschaltung der Futterdosierung über Niveauschalter, die sich am Ende der Futterlinien befinden. Wird Futter mit hoher Feuchtigkeit verfüttert, ist darauf zu achten, daß alle Futterstellen täglich einmal leergefressen werden. Für die Futterrationierung gibt es eigene Programme, die auch bei diesem System eine Futterrationierung erlauben. Ist eine strenge Futterbeschränkung erforderlich (z.B. Elterntiere) so wird vorgeschlagen, daß für jede Futterabgabevorrichtung eine eigene als Dosiereinrichtung ausgebildete Hauptfördereinrichtung installiert wird.

### Versorgung mit Futter bei Schweinen:

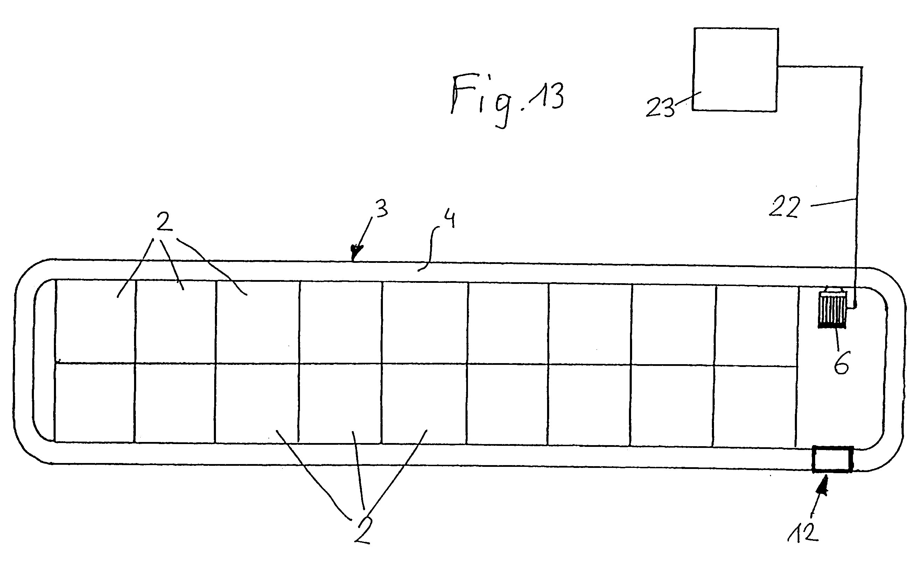

Das Futter wird ebenso wie bei der Geflügelfütterung mittels der Hauptfördereinrichtung oder mittels den dieser vorgeschalteten Komponentenförderern zuerst für jede Futterabgabevorrichtung dosiert und dann in den Stall zu den einzelnen Tierabteilen bzw. zu den diesen zugeordneten Futterabgabevorrichtungen 28 gefördert (Fig. 5). Für jedes Abtei ist mindestens eine von einer Absperrvorrichtung 11 automatisch zu öffnende bzw. zu schließende Futterablauföffnung vorgesehen, über welche das Futter in die verschiedenen Futterabgabevorrichtungen 28, wie beispielsweise Rund-, Quer- oder Längströge 33, Futterautomaten oder Futterwagen abgegeben wird. Für die Futterverteilung zwischen Futterablaufklappe 11 und Freßplatz kann eine Futterabgabevorrichtung 28 vorgesehen sein, welche die Verteilung des Futters auf die Freßplätze durch das automatische Schwenken eines speziellen Futterablaufrohres 29 erreicht. Zu diesem Zweck wird das Futterablaufrohr 29 mittels eines flexiblen Anschlußstückes 30 am Auslauf der Futterablaufklappe 11 befestigt, und mittels eines Elektromotors 31 über ein Gestänge oder Seil 32 geschwenkt. Um Kosten zu sparen, können alle an einer Hauptfördereinrichtung angebrachten Futterablaufrohre gleichzeitig betätigt werden. Die Steuerung des Elektromotors 31 erfolgt ebenfalls über die Steuereinrichtung 23 mittels vorgegebenem Programm. Um die Höhe der Ausgabeöffnung des Futterablaufrohres 29 über dem Freßplatz bzw. über dem Futtertrog 33 während des Verschwenkens des Futterablaufrohres 29 konstant zu halten, kann das Futterablaufrohr 29 mit zwei ineinanderschiebbaren Rohrstutzen 29a, 29b versehen sein, von denen der eine Rohrstutzen 29a mit dem flexiblen Anschlußstück 30 fest verbunden ist und der andere Rohrstutzen 29b als Auslaufstutzen ausgebildet ist. (Fig. 12).

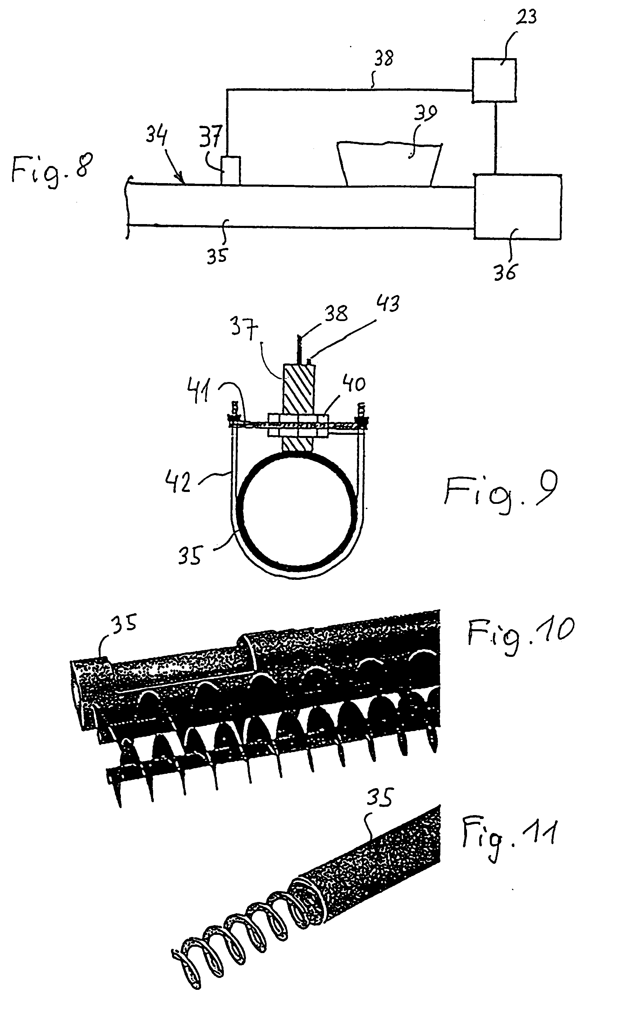

Die Hauptfördereinrichtung 7 und die Komponentenfördereinrichtungen 16,17 bestehen aus Rohrförderern mit einem steifen oder flexiblen Förderrohr, in welchem eine Förderschnecke oder eine Förderspirale (Fig. 10, 11) rotiert. Die Antriebe 8, 15 sind über Steuerleitungen 22 mit der Steuereinrichtung 23 verbunden. In den Fig. 8 bis 11 ist eine bevorzugte Ausführungsform einer solchen Rohrfördereinrichtung dargestellt.

Die Rohrfördereinrichtung 34 besteht aus einem Förderrohr 35, in welchem eine Förderschnecke (Fig. 10) oder eine Förderspirale (Fig. 11) angeordnet ist, die von einem Antrieb 36 angetrieben wird, an dessen Gehäuse das Förderrohr 35 befestigt ist. Auf dem Förderrohr 35 ist ein Füllstandssensor 37 angebracht, der ebenso wie der Antrieb 36 mit einer Steuervorrichtung 23 über eine Drahtleitung 38 verbunden ist. Zwischen dem Sensor 37 und dem Antrieb 36 mündet ein Zuführtrichter 39 für das mit der Rohrfördereinrichtung 34 zu transportierende körnige oder mehlige Gut in das Förderrohr 35. Der Sensor 37 ist mit seiner Halterung 40 an einer Halteplatte 41 befestigt, welche mittels einer Rohrschelle 42 am Förderrohr 35 befestigt ist. Der Sensor 37 berührt mit seiner Vorderseite das Förderrohr 35 von außen, während an seiner Rückseite das Verbindungskabel 38 befestigt ist, welches zur Steuervorrichtung 23 führt.

Der Sensor 37 ist durch das im Förderrohr 35 befindliche, in diesem von der Förderschnecke bzw. der Förderspirale bewegte körnige oder mehlige Gut aktivierbar und ermittelt den Füllstand des körnigen oder mehligen Gutes im Förderrohr 35 ohne mit dem körnigen oder mehligen Gut in Berührung zu kommen. An der Rückseite des Sensors 37 ist eine Einstellschraube 43 zur Verstellung des Füllstandsniveaus, auf das der Sensor 37 anspricht, vorgesehen.

Gemäß einem Ausführungsbeispiel der Erfindung besitzt die Rohrfördereinrichtung 34 ein flexibles Förderrohr aus Kunststoff, in welchem eine flexible Förderspirale umläuft und auf welchem ein Sensor 37 aufgesetzt ist, dessen Sensorkopf deutlich kleiner ist, als der Abstand zweier aufeinanderfolgender Spiralwindungen der Förderspirale. Der vorzugsweise als kapazitativer Sensor ausgebildete Sensor 37 ermittelt klar unterscheidbare Signale für die Spiralwindungen der Metallförderspirale einerseits und für das körnige oder mehlige Gut im Kunststoff-Förderrohr 35 anderseits.

Wird der Sensor 37 als Kontrollorgan für die Rohrfördereinrichtung 34 verwendet, so meldet der Sensor 37 der Steuervorrichtung 23 bei laufender Förderspirale oder Dosierspirale, daß der Füllstand im Förderrohr 35 unter dem voreingestellten Niveau ist und die Steuervorrichtung 23 schaltet die Rohrfördereinrichtung 34 ab und gibt Alarm.

Wird der Sensor 37 zur Steuerung der Drehzahl der Dosierspirale der als Dosiervorrichtung ausgebildeten Rohrfördereinrichtung 34 verwendet, so kommt ein Sensor 37 zum Einsatz, der ein Analogsignal an die Steuervorrichtung 23 abgibt. Änderungen im Füllstand des im Förderrohr 35 transportierten und dosierten körnigen oder mehligen Gutes führen zu einer Änderung des Analogsignals. Aufgrund der Meßwertveränderungen korrigiert die Steuervorrichtung 23 die Drehzahl der Dosierspirale, sodaß trotz der Füllstandsänderung die gewünschte Dosiermenge erreicht wird.

Fig. 13 zeigt eine einzelne Käfigetage mit einer umlaufenden endlosen Futterbahn 3. Die Käfige 2 sind in zwei Reihen nebeneinander und die beiden Reihen mit ihren Rückseiten aneinander anstoßend angeordnet. Die Freßplätze der Tiere sind jeweils an den Käfigvorderseiten angeordnet, entlang welchen die Futterbahn 3 verläuft. Die Futterbahn 3 ist als Trogkettenförderer ausgebildet, in dessen Trog 4 ein endloses Förderorgan umläuft, welches von einem Antriebsmotor 6 angetrieben wird, der über eine Steuerleitung 22 mit der Steuereinrichtung 23 verbunden ist. In dem außerhalb der Freßplätze gelegenen Bereich der Futterbahn ist eine Futteraufgabestelle vorgesehen, oberhalb der ein Fallrohr 12 mündet.

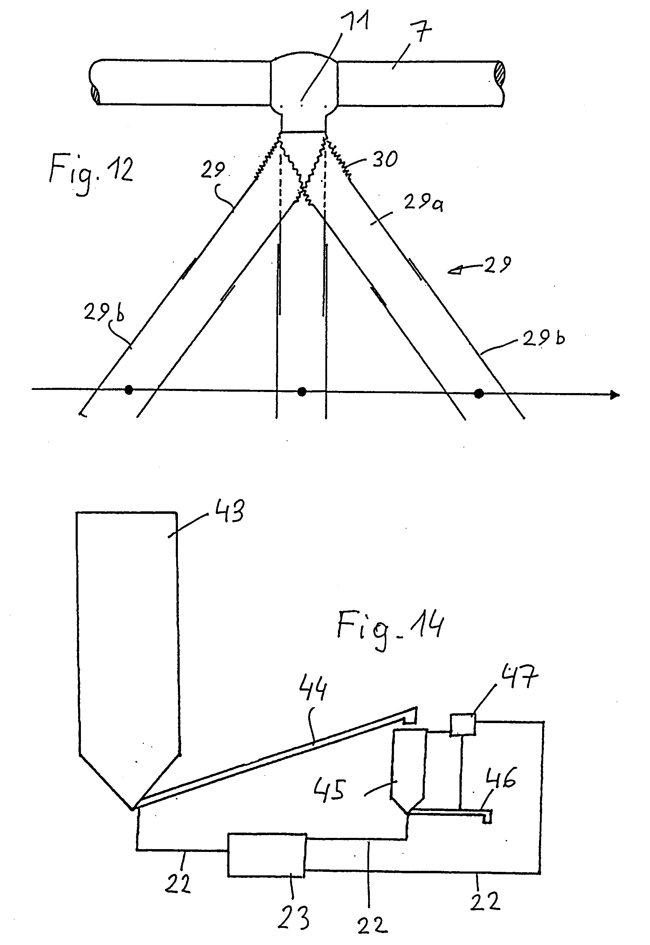

Fig. 14 zeigt einen Anfangsabschnitt einer Hauptfördereinrichtung bzw. einer Komponentenfördereinrichtung. Die Fördereinrichtung besteht aus einer, an den das Futter bzw. die Futterkomponente enthaltenden Vorratsbehälter 43 anschließenden Fördereinrichtung 44, die das Futter bzw. die Futterkomponente in einem Wiegebehälter 45 transportiert, an dessen unterem Ende eine mit ihm fest verbundene Dosiereinrichtung 46 befestigt ist. Die aus Wiegebehälter 45 und Dosiereinrichtung 46 bestehende Einheit ist mit einer Wiegeeinrichtung 47 verbunden, welche permanent das Gewicht dieser Einheit ermittelt und an die Steuereinrichtung 22 weiterleitet, welche einerseits die Fördereinrichtung 44 zum Nachfüllen von Futter bzw. Futterkomponente in den Wiegebehälter aus- und einschaltet und anderseits die Dosierung durch die Dosiereinrichtung regelt, bei einer als Dosierschnecke ausgebildeten Dosiereinrichtung beispielsweise durch Regelung der Schneckendrehzahl.

Die Anlage ist so konzipiert, daß im Wiegebehälter 45 jene Menge an Futter bzw. einer Futterkomponente gefüllt werden kann, die pro Fütterung für ein Abteil oder eine Käfigetage ausreicht. Wenn der Wiegebehälter 45 mit der vorprogrammierten Menge gefüllt ist, wird die Fördereinrichtung 44 abgeschaltet. Wenn die Dosiereinrichtung 46 aufgrund eines vorgegebenen Ablaufprogrammes dosiert, kann diese aufgrund der Wiegeeinrichtung 47 exakt dosieren. Ist ein Tierabteil gefüttert, so wird der Wiegebehälter 45 erneut von der Fördereinrichtung 44 befüllt. Während des Nachfüllens des Wiegebehälters 45 wird die Dosiereinrichtung 46 abgeschaltet. Die Fördereinrichtung 44 ist mit einer hohen Förderleistung ausgestattet, sodaß nur kurze Wartezeiten zwischen den Fütterungen der einzelnen Tierabteilungen erreicht werden.

Ist eine Abschaltung der Dosiereinrichtung 46 aufgrund des Fütterungsablaufes nicht möglich, und der Wiegebehälter 45 nicht ausreichend groß, so wird der Wiegebehälter 45 während der Fütterung nachgefüllt. Die Dosiereinrichtung 46 dosiert, während des Nachfüllens, aufgrund vorhergegangener Durchschnittswerte weiter. Während der Fütterung wird das Gewicht der Einheit ständig durch die Wiegeeinrichtung 47 an die Steuereinrichtung 23 weitergeleitet. Aufgrund der ermittelten Gewichte und des vorgegebenen Programmes, regelt die Steuereinrichtung 23 die Fördergeschwindigkeit der Dosiereinrichtung 46. Weiters wird von der Steuereinrichtung 23 aufgrund des ermittelten Gewichtes der aus Wiegebehälter 45 und Dosiereinrichtung 46 bestehenden Einheit, das Nachfüllen des Wiegebehälters 45 mittels der Fördereinrichtung 44 gesteuert.

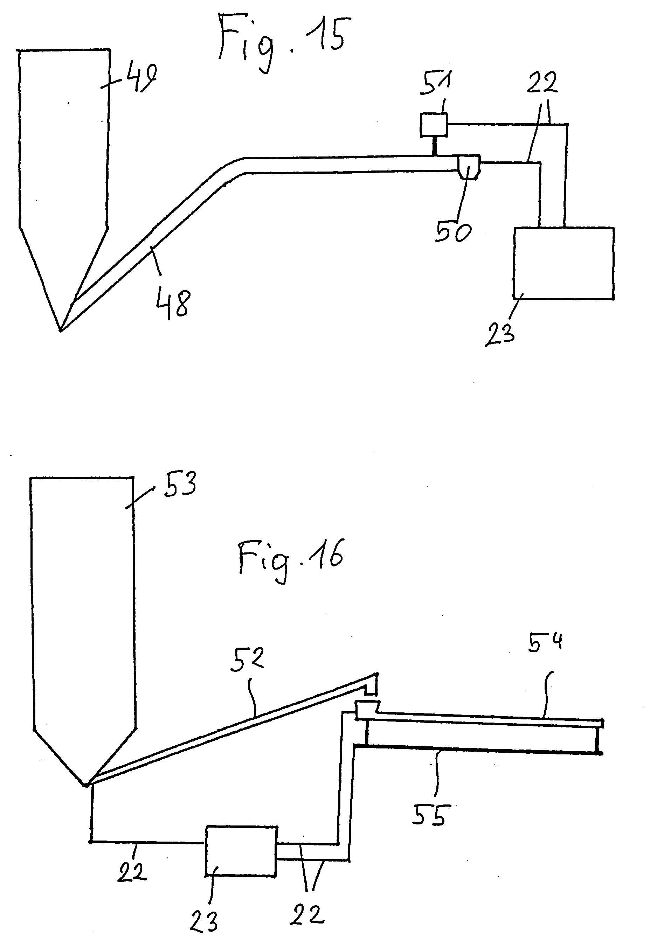

Fig. 15 zeigt eine als Dosiereinrichtung ausgebildete Haupt- oder Komponentenfördereinrichtung 48, welche das Futter oder die Futterkomponente vom Lagersilo 49 zur Auslauföffnung 50 transportiert. Dieser Abschnitt der Fördereinrichtung übergibt das Futter oder die Futterkomponente an eine Be- oder Verarbeitungsmaschine oder an die Hauptfördereinrichtung. Ein Abschnitt der Fördereinrichtung ist mit einer Wiegeeinrichtung 51 versehen, die ebenso wie der Antrieb der Dosierschnecke über Steuerleitungen 22 mit der Steuereinheit 23 verbunden ist.

Die Dosiereinrichtung 48 ist zugleich ein Teil der Fördereinrichtung oder die komplette Fördereinrichtung. Ein Teil der Fördereinrichtung wird mittels der Wiegeeinrichtung 51 permanent verwogen. Das ermittelte Gewicht wird ständig an die Steuereinrichtung 23 weitergeleitet. Bei Veränderung des spezifischen Gewichtes des Futters oder einer Futterkomponente, errechnet die Steuereinrichtung 23 eine neue veränderte Fördergeschwindigkeit für die Dosierschnecke der Dosiereinrichtung 48. Dadurch ist immer eine exakte Dosierung gegeben.

Fig. 16 zeigt einen Anfangsabschnitt einer Hauptfördereinrichtung einer Tierfütterungsanlage, bei welchem das Futter bzw. eine Futterkomponente mittels einer als Dosiereinrichtung ausgebildeten Fördereinrichtung 52 von dem Lagersilo 53 zu einer nachgeordneten Fördereinrichtung 54 transportiert wird, welche mit einer Wiegeeinrichtung 55 verbunden ist. Die Wiegeeinrichtung 55 und die Antriebe der beiden Fördereinrichtungen 52 und 54 sind über Steuerleitungen 22 mit der Steuereinrichtung 23 der Tierfütterungsanlage verbunden.

Die Fördereinrichtung 52 wird mittels der Steuereinrichtung 23 drehzahlgeregelt. Die Fördereinrichtung 54 hat eine konstante Fördergeschwindigkeit, und wird mittels der Wiegeeinrichtung 55 permanent verwogen.

Bei Veränderung des spezifischen Gewichtes des Futters oder einer Futterkomponente, errechnet die Steuereinrichtung 23 eine neue veränderte Fördergeschwindigkeit für die Fördereinrichtung 52.

### Zum Beispiel:

Futterbedarf in einer Minute = 10 kg
Förderdauer des Futters auf oder in der konstanten Fördereinrichtung 54 = 2 Minuten
Erforderliche Futtermenge in oder auf der Fördereinrichtung 54 = 20 kg

Die bei der Erfindung eingesetzten Fördereinrichtungen und Dosiereinrichtungen können aus: Förderspiralen, Förderschnecken, Förderbänder, oder sonstige Rohrfördereinrichtungen bestehen. Die Wiegeeinrichtungen können Wiegezellen, Wiegestäbe, Wiegemeßdosen oder sonstige Waagen sein.

Sämtliche Dosiereinrichtungen, Fördereinrichtungen und Wiegeeinrichtungen sind mit der Steuereinrichtung verbunden.

Die Vorteile der Erfindung sind darin zu sehen, daß eine in Qualität und Quantität individuelle Futterzuteilung ermöglicht wird. Weiters ist die Vorgabe von Futterkurven über eine Wachstumsperiode hinweg möglich.

Ein weiterer Vorteil der Erfindung besteht darin, daß bisher erforderliche zusätzliche Dosier- und Mischanlagen zur hofeigenen Futteraufbereitung eingespart werden können. Gleichzeitig wird eine innige Vermengung der verschiedenen Komponenten in der Hauptfördereinrichtung erreicht.

Ein weiterer Vorteil besteht darin, daß die Futterzusammensetzung des Mischfutters sowie der jeweilige Anteil jeder Futterkomponente bei jeder Fütterung individuell eingestellt bzw. verändert werden kann. Die vorliegende Erfindung erlaubt es, die Futterzusammensetzung und die Futtermischung an über den Tagesverlauf oder über Wochen unterschiedlichen Futterbedürfnissen der Tiere bzw. einzelner Tierabteile der Tierfütterungsanlage anzupassen. Auch die Anpassung an Veränderungen in Tierbestand ist erfindungsgemäß möglich.

## Patentansprüche

1. Verfahren zum Versorgen von Tieren mit Futter, wobei das Futter zumindest einem stationären Futtersilo oder mehreren stationären Futterkomponentensilos entnommen und mittels einer stationären Hauptfördereinrichtung zu den Freßplätzen der Tiere transportiert wird, dadurch gekennzeichnet, daß für eine Fütterung das Futter im Anfangsabschnitt der stationären Hauptfördereinrichtung oder jede Futterkomponente in einer, der stationären Hauptfördereinrichtung vorgelagerten stationären Komponentenfördereinrichtung auf eine, auf den Futterbedarf aller zu versorgender Tiere abgestimmte Menge dosiert und ohne Zwischenlagerung zu den einzelnen Freßplätzen transportiert wird.

2. Verfahren nach Anspruch 1, dadurch gekennzeichnet, daß die Futterkomponenten jeweils zuerst in ihren Komponentenfördereinrichtungen entsprechend ihrem Anteil am Futter einzeln dosiert, dann der Hauptfördereinrichtung zugeführt und in dieser zum Futter vermischt werden.

3. Verfahren nach Anspruch 1 oder 2, dadurch gekennzeichnet, daß jede Futterkomponente bereits am Beginn der eigenen Komponentenfördereinrichtung dosiert wird.

4. Verfahren nach Anspruch 3, dadurch gekennzeichnet, daß jede zu bearbeitende bzw. zu verarbeitende Futterkomponente bereits fertig dosiert einer, der jeweiligen Komponentenfördereinrichtung vorgelagerten Bearbeitungsmaschine bzw. Verarbeitungsmaschine zugeführt wird.

5. Verfahren nach Anspruch 3 oder 4, dadurch gekennzeichnet, daß jede Futterkomponente nach dem Dosieren gewogen wird.

6. Verfahren nach Anspruch 3 oder 4, dadurch gekennzeichnet, daß jede Futterkomponente während des Dosierens gewogen wird.

7. Verfahren nach Anspruch 3 oder 4, dadurch gekennzeichnet, daß die bereits dosierte Futterkomponente während des Weitertransportes gewogen wird.

8. Verfahren nach einem der Ansprüche 1 bis 7, dadurch gekennzeichnet, daß das Futter am Beginn einer der stationären Hauptfördereinrichtung nachgeordneten, entlang der Freßplätze der Tiere verlaufenden, stationären Futterbahn auf die, der jeweiligen Futterbahn zuzuführende Menge dosiert wird.

9. Verfahren nach einem der Ansprüche 1 bis 7, dadurch gekennzeichnet, daß das Futter in der Hauptfördereinrichtung auf die, der jeweiligen Futterbahn zuzuführende Menge dosiert wird.

10. Verfahren nach Anspruch 9, dadurch gekennzeichnet, daß das Futter am Beginn der Futterbahn durch Verändern der Fördergeschwindigkeit der Hauptfördereinrichtung auf die, der jeweiligen Futterbahn zuzuführende Menge dosiert wird.

11. Verfahren nach einem der Ansprüche 1 bis 9, dadurch gekennzeichnet, daß das Futter bereits am Beginn der Hauptfördereinrichtung auf die, der jeweiligen Futterbahn zuzuführende Menge dosiert wird.

12. Verfahren nach einem der Ansprüche 8 bis 11, dadurch gekennzeichnet, daß das Futter in der jeweiligen Futterbahn durch Änderung der Fördergeschwindigkeit der Futterbahn dem jeweiligen Futterbedarf der Tiere dieser Futterbahn entsprechend dosiert wird.

13. Verfahren nach einem der Ansprüche 1 bis 12, dadurch gekennzeichnet, daß das Futter nach dem Dosieren gewogen wird.

14. Verfahren nach einem der Ansprüche 1 bis 12, dadurch gekennzeichnet, daß das Futter während des Dosierens gewogen wird.

15. Verfahren nach einem der Ansprüche 1 bis 12, dadurch gekennzeichnet, daß das bereits dosierte Futter während des Weitertransportes gewogen wird.

16. Verfahren nach einem der Ansprüche 1 bis 15, dadurch gekennzeichnet, daß das Futter bzw. die jeweilige Futterkomponente erst dann an eine nachgeordnete Fördereinrichtung weitergegeben wird, wenn deren Futterförderorgan in Bewegung gesetzt wurde.

17. Verfahren nach einem der Ansprüche 8 bis 16, dadurch gekennzeichnet, daß einer Futterbahn von der für diese Futterbahn dosierten Futtermenge zu Beginn der Fütterung ein größerer Anteil zugeführt wird als gegen Ende der Fütterung.

18. Verfahren nach Anspruch 17, dadurch gekennzeichnet, daß die pro Zeiteinheit der Futterbahn zugeführte Futtermenge vom Beginn der Fütterung bis zum Ende der Fütterung allmählich oder stufenweise verringert wird.

19. Verfahren nach einem der Ansprüche 8 bis 18, dadurch gekennzeichnet, daß in einer Futterbahn zu Beginn der Fütterung eine größere Futtermenge weitertransportiert wird als gegen Ende der Fütterung.

20. Verfahren nach Anspruch 19, dadurch gekennzeichnet, daß die in der Futterbahn weitertransportierte Futtermenge vom Beginn der Fütterung bis zum Ende der Fütterung allmählich oder stufenweise verringert wird.

21. Verfahren nach einem der Ansprüche 1 bis 20, dadurch gekennzeichnet, daß nach einer Fütterung das von den Tieren nicht aufgenommene und in der Futterbahn liegende Futter nach einer Pause mindestens noch einmal weitertransportiert wird.

22. Verfahren nach Anspruch 21, dadurch gekennzeichnet, daß nach der Fütterung das Futterförderorgan der Futterbahn zur Verteilung des in der Futterbahn liegenden Futters noch mehrmals, jeweils nach einer Pause weiterlaufen gelassen wird.

23. Tierfütterungsanlage zur Durchführung des Verfahrens nach einem oder mehreren der Ansprüche 1 bis 22, wobei zumindest eine von einem stationären Futtersilo (25) ausgehende, stationäre Hauptfördereinrichtung (7) vorgesehen ist, welche das Futter über Fallrohre (12) an Futterbahnen (3) abgibt, welche entlang den Freßplätzen der Tiere verlaufen und als Futterfördereinrichtungen mit eigenen Förderorganen (5) und eigenen Antrieben (6) ausgebildet sind und das Futter zu den Freßplätzen transportieren, wobei für die Hauptfördereinrichtung (7) und die Futterbahnen (3) eine gemeinsame Steuereinrichtung (23) vorgesehen ist, dadurch gekennzeichnet, daß die Hauptfördereinrichtung (7) mit Absperrvorrichtungen (11) für die Fallrohre (12) versehen ist und zumindest in ihrem Anfangsabschnitt als Dosiereinrichtung zum Dosieren einer, auf den Futterbedarf aller zu versorgenden Tiere abgestimmten Menge ausgebildet ist und daß zum Dosieren der jeweils einer Futterbahn (3) pro Fütterung zuzuführenden Futtermenge der Antrieb (8) der Hauptfördereinrichtung (7) und die Antriebe (10) der Absperrvorrichtungen (11) mit der Steuereinrichtung (23) verbunden sind, welche eine Eingabevorrichtung (24) für die bei der Fütterung zu berücksichtigenden Parameter besitzt.

24. Anlage nach Anspruch 23, dadurch gekennzeichnet, daß ein Abschnitt der Hauptfördereinrichtung (48) zum permanenten Verwiegen der von der Hauptfördereinrichtung (48) transportierten Futtermenge mit einer, mit der Steuereinrichtung (23) verbundenen Wiegeeinrichtung (51) versehen ist.

25. Anlage nach Anspruch 24, dadurch gekennzeichnet, daß der als Dosiereinrichtung ausgebildete Abschnitt der Hauptfördereinrichtung (48) mit der Wiegeeinrichtung (51) versehen ist.

26. Anlage nach einem der Ansprüche 23 bis 25, dadurch gekennzeichnet, daß die Steuereinrichtung (23) programmierbar ist.

27. Anlage nach einem der Ansprüche 23 bis 26, dadurch gekennzeichnet, daß die Hauptfördereinrichtung als stationäre Rohrfördereinrichtung (7) mit regelbarer Fördergeschwindigkeit für das zu transportierende Futter ausgebildet ist, daß entlang der Rohrfördereinrichtung (7) in die Fallrohre (12) mündende und durch die Absperrvorrichtungen (11) verschließbare Futterablauföffnungen (9) vorgesehen sind, und daß die Steuereinrichtung (23) mit den Antrieben (10) der Absperrvorrichtungen (11) zum Öffnen und Schließen der Futterablauföffnungen (9) und mit dem Antrieb (8) der Rohrfördereinrichtung (7) zum Regeln der Fördergeschwindigkeit verbunden ist.

28. Anlage nach Anspruch 27, dadurch gekennzeichnet, daß die Rohrfördereinrichtung (7) zumindest eine Dosierschnecke bzw. Dosierspirale mit regelbarer Drehzahl enthält.

29. Tierfütterungsanlage zur Durchführung des Verfahrens nach einem oder mehreren der Ansprüche 1 bis 22, wobei zumindest eine von einem stationären Futtersilo (25) ausgehende, stationäre Hauptfördereinrichtung (7) vorgesehen ist, welche das Futter über Fallrohre (12) an stationäre, das Futter zu den Freßplätzen transportierende Futterbahnen (3) abgibt, welche entlang den Freßplätzen der Tiere verlaufen und als stationäre Futterfördereinrichtungen mit eigenen Förderorganen (5) und eigenen Antrieben (6) ausgebildet sind, wobei für die stationäre Hauptfördereinrichtung (7) und die stationären Futterbahnen (3) eine gemeinsame Steuereinrichtung (23) vorgesehen ist, dadurch gekennzeichnet, daß die stationäre Hauptfördereinrichtung (7) mit Absperrvorrichtungen (11) für die Fallrohre (12) versehen ist und zumindest in ihrem Anfangsabschnitt als Dosiereinrichtung zum Dosieren einer, auf den Futterbedarf aller zu versorgenden Tiere abgestimmten Menge ausgebildet ist, daß die stationäre Futterbahnen (3) als Dosiereinrichtungen ausgebildet sind, und daß zum Dosieren der jeweils in einer Futterbahn (3) jedem Freßplatz zuzuführenden Futtermenge der Antrieb (8) der Hauptfördereinrichtung (7) und die Antriebe (10) der Absperrvorrichtungen (11) und die Antriebe (6) der Futterbahnen (3) mit der Steuereinrichtung (23) verbunden sind.

30. Anlage nach Anspruch 29, dadurch gekennzeichnet, daß die Steuereinrichtung (23) programmierbar ist.

31. Anlage nach Anspruch 29 oder 30, dadurch gekennzeichnet, daß die Steuereinrichtung (23) eine Eingabevorrichtung (24) für die bei der Fütterung zu berücksichtigenden Parameter besitzt.

32. Anlage nach Anspruch 29 oder 30, dadurch gekennzeichnet, daß die Steuereinrichtung (23) einen PC für die Eingabe der bei der Fütterung zu berücksichtigenden Parameter besitzt.

33. Anlage nach Anspruch 29, dadurch gekennzeichnet, daß die Hauptfördereinrichtung als stationäre Rohrfördereinrichtung (7) mit konstanter Fördergeschwindigkeit für das zu transportierende Futter ausgebildet ist, daß entlang der Rohrfördereinrichtung (7) in die Fallrohre (12) mündende und durch die Absperrvorrichtungen (11) verschließbare Futterablauföffnungen (9) vorgesehen sind, und daß die Steuereinrichtung (23) mit den Antrieben (10) der Absperrvorrichtungen (11) zum Öffnen und Schließen der Futterablauföffnungen (9) und mit den Antrieben (6) der Futterbahnen (3) zum Regeln der in der jeweiligen Futterbahn (3) zu den Freßplätzen zu transportierenden Futtermenge verbunden ist.

34. Tierfütterungsanlage zur Durchführung des Verfahrens nach einem oder mehreren der Ansprüche 1 bis 22, wobei eine das Futter zu den Freßplätzen transportierende Fördereinrichtung vorgesehen ist, welche zumindest zwei, jeweils von einem stationären Futterkomponentensilo (13, 14) ausgehende stationäre Komponentenförderer (16, 17) und zumindest einen die Futterkomponenten miteinander vermischenden stationären Futterförderer (7) umfaßt, der zu einer das Futter an die einzelnen Freßplätze verteilenden Futterabgabevorrichtung (3,28) führt, dadurch gekennzeichnet, daß jeder Komponentenförderer (16, 17) als Dosiereinrichtung zum kontinuierlichen Dosieren der dem Futterförderer (7) für jede Fütterung jeweils zuzuführenden Futterkomponentenmenge ausgebildet ist, daß der Futterförderer (7) als stationäre Hauptfördereinrichtung ausgebildet ist, welche mit allen Futterabgabevorrichtungen (3, 28) jeweils über eine, durch eine Absperrvorrichtung (11) verschließbare Futterablauföffnung (9) verbunden ist, und daß zum Dosieren der jeweils einer Futterabgabevorrichtung (3,28) pro Fütterung zuzuführenden Futtermenge die Antriebe (15) der Komponentenförderer (16, 17) und der Antrieb (8) der Hauptfördereinrichtung (7) sowie jeder Antrieb (10) jeder Absperrvorrichtung (11) mit einer Steuereinrichtung (23) verbunden sind.

35. Anlage nach Anspruch 34, dadurch gekennzeichnet, daß die Hauptfördereinrichtung (48) einen Abschnitt besitzt, der zum permanenten Verwiegen der von der Hauptfördereinrichtung (48) transportierten Futtermenge mit einer, mit der Steuereinrichtung (23) verbundenen Wiegeeinrichtung (51) versehen ist.

36. Anlage nach Anspruch 35, dadurch gekennzeichnet, daß ein als Dosiereinrichtung ausgebildeter Abschnitt der Hauptfördereinrichtung (48) mit der Wiegeeinrichtung (51) versehen ist.

37. Anlage nach Anspruch 34, dadurch gekennzeichnet, daß jede Komponentenfördereinrichtung (48) einen Abschnitt besitzt, der mit einer, mit der Steuereinrichtung (23) verbundenen Wiegeeinrichtung (51) zum permanenten Verwiegen der von der Komponentenfördereinrichtung (48) transportierten Futtermenge versehen ist.

38. Anlage nach Anspruch 37, dadurch gekennzeichnet, daß ein als Dosiereinrichtung ausgebildeter Abschnitt der Komponentenfördereinrichtung (48) mit der Wiegeeinrichtung (51) versehen ist.

39. Anlage nach einem der Ansprüche 34 bis 38, dadurch gekennzeichnet, daß die Steuereinrichtung (23) programmierbar ist.

40. Anlage nach einem der Ansprüche 34 bis 39, dadurch gekennzeichnet, daß die Steuereinrichtung (23) eine Eingabevorrichtung (24) für die bei der Fütterung zu berücksichtigenden Parameter besitzt.

41. Anlage nach einem der Ansprüche 34 bis 40, dadurch gekennzeichnet, daß die Steuereinrichtung (23) einen PC für die Eingabe der bei der Fütterung zu berücksichtigenden Parameter besitzt.

42. Anlage nach einem der Ansprüche 34 bis 41, dadurch gekennzeichnet, daß die Komponentenförderer (16, 17) als stationäre Rohrfördereinrichtungen mit regelbarer Fördergeschwindigkeit ausgebildet sind und daß die Steuereinrichtung (23) zum Dosieren der der Hauptfördereinrichtung (7) zuzuführenden Komponentenmenge eine Geschwindigkeitsregelung für jeden Komponentenrohrförderer (16, 17) umfaßt, wobei das Mengenverhältnis der Futterkomponenten zueinander durch die Steuereinrichtung (23) einstellbar ist.

43. Anlage nach einem der Ansprüche 34 bis 42, dadurch gekennzeichnet, daß zum Verarbeiten einer Futterkomponente dem jeweiligen stationäre Komponentenförderer (16, 17) eine Verarbeitungsmaschine (18, 19) nachgeordnet ist, deren Durchflußmenge von der Steuereinrichtung (23) über die Geschwindigkeitsregelung für den Komponentenförderer (16, 17) regelbar ist.

44. Anlage nach einem der Ansprüche 34 bis 43, dadurch gekennzeichnet, daß jeder Komponentenförderer (16, 17) zumindest eine Dosierschnecke bzw. Dosierspirale mit regelbarer Drehzahl enthält.

45. Anlage nach einem der Ansprüche 34 bis 44, dadurch gekennzeichnet, daß die Futterabgabevorrichtungen als mit eigenen Förderorganen (5) und eigenen Antrieben (6) versehene Futterbahnen (3) ausgebildet sind, die entlang den Freßplätzen verlaufen und deren Antriebe (6) zum Dosieren der jeweils in einer Futterbahn (3) jedem Freßplatz zuzuführenden Futtermenge mit der Steuereinrichtung (23) verbunden sind.

46. Anlage nach einem der Ansprüche 26 bis 48, dadurch gekennzeichnet, daß die Hauptfördereinrichtung (7) von ihren Futterablauföffnungen (9) ausgehende Fallrohre (12) besitzt, die direkt und unmittelbar oberhalb der Förderorgane (5) der Futterbahnen (3) in die Futterbahnen (3) münden, wobei die Futterabgabe aus der Hauptfördereinrichtung (7) nur bei laufender Futterbahn (3) erfolgt.

47. Anlage nach einem der Ansprüche 23 bis 46, dadurch gekennzeichnet, daß in den Futterbahnen (3) mit der Steuereinrichtung (23) verbundene Futterniveausensoren (26) vorgesehen sind und daß die Steuereinrichtung (23) eine Zeitsteuerung besitzt, welche bei der jeweiligen Futterbahn (3) die Futterabgabe aus der Hauptfördereinrichtung (7) bei sich bewegendem Futterförderorgan (5) der Futterbahn (3) bis zum Absinken des Futterniveaus unter das vom Futterniveausensor (26) vorgesehene Niveau verzögert.

48. Anlage nach einem der Ansprüche 23 bis 47, dadurch gekennzeichnet, daß die Steuereinrichtung (23) zur besseren Versorgung der vom Fallrohr (12) weiter entfernten Bereiche einer Futterbahn (3) mit einer Zeitsteuerung versehen ist, welche bei gleichbleibender der Futterbahn (3) zugeteilter Futtermenge die Futterzufuhr zur Futterbahn (3) zu Beginn der Fütterung erhöht und gegen Ende der Fütterung absenkt.

49. Anlage nach einem der Ansprüche 34 bis 44, dadurch gekennzeichnet, daß die Futterabgabevorrichtung (28) als an der Futterablauföffnung (9) anschließendes, mit zumindest einem beweglichen Abschnitt (30) versehenes, über den Freßplätzen automatisch bewegbares Futterablaufrohr (29) ausgebildet ist.

50. Anlage nach Anspruch 49, dadurch gekennzeichnet, daß das Futterablaufrohr (29) zwei ineinanderschiebbare Rohrstutzen (29a, 29b) besitzt, von denen der eine als Auslaufstutzen (29b) ausgebildet ist.

51. Anlage nach einem der Ansprüche 23 bis 50, dadurch gekennzeichnet, daß zum Anpassen der jeweils dosierten Futtermengen an den sich bei Temperaturschwankungen verändernden Futterbedarf der Tiere ein Temperaturfühler (27) mit der Steuereinrichtung (23) verbunden ist.

## Claims

1. Process for providing animals with feed, wherein the feed is removed from at least stationary feed silo or several stationary feed component silos and is conveyed to the animals' eating areas by means of a stationary main conveyor, characterized in that, for feeding purposes, the feed is metered in the starting portion of the stationary main conveyor or each feed component is metered in a stationary component conveyor preceding the stationary main conveyor to a quantity adapted to the feed requirement of all animals to be supplied and is conveyed to the individual eating areas without intermediate storage.

2. Process according to claim 1, characterized in that the feed components are each first metered individually in their component conveyors according to their content in the feed, are then supplied to the main conveyor and mixed to form the feed therein.

3. Process according to claim 1 or 2, characterized in that each feed component is metered at the beginning of its own component conveyor.

4. Process according to claim 3, characterized in that each feed component to be treated or processed is supplied in metered form to a treatment or processing machine preceding the respective component conveyor.

5. Process according to claim 3 or 4, characterized in that each feed component is weighed after the metering operation.

6. Process according to claim 3 or 4, characterized in that each feed component is weighed during the metering operation.

7. Process according to claim 3 or 4, characterized in that the already metered feed component is weighed during further conveyance.

8. Process according to one of claims 1 to 7, characterized in that the feed is metered to the quantity which is to be supplied to the respective feed trough at the beginning of a stationary feed trough following the stationary main conveyor and extending along the animals' eating areas.

9. Process according to one of claim 1 to 7, characterized in that the feed is metered to the quantity which is to be supplied to the respective feed trough in the main conveyor.

10. Process according to claim 9, characterized in that the feed is metered to the quantity which is to be supplied to the respective feed trough, at the beginning of the feed trough, by varying the conveying rate of the main conveyor.

11. Process according to one of claims 1 to 9, characterized in that the feed is metered to the quantity which is to be supplied to the respective feed trough at the beginning of the main conveyor.

12. Process according to one of claims 8 to 11, characterized in that the feed is metered in the respective feed trough by varying the conveying rate of the feed trough according to the respective feed requirement of the animals at this feed trough.

13. Process according to one of claims 1 to 12, characterized in that the feed is weighed after metering.

14. Process according to one of claims 1 to 12, characterized in that the feed is weighed during metering.

15. Process according to one of claims 1 to 12, characterized in that the already metered feed is weighed during further conveyance.

16. Process according to one of claims 1 to 15, characterized in that the feed or the respective feed component is not forwarded to a subsequent conveyor until its feed conveying element has been set into motion.

17. Process according to one of claims 8 to 16, characterized in that a greater proportion of the quantity of feed metered for a feed trough is supplied to a feed trough at the beginning of feeding than at the end of feeding.

18. Process according to claim 17, characterized in that the quantity of feed supplied to the reed trough per unit time is reduced progressively or stepwise from the beginning of feeding to the end of feeding.

19. Process according to one of claims 8 to 18, characterized in that a greater quantity of read is conveyed on in a feed trough at the beginning of feeding than at the end of feeding.

20. Process according to claim 19, characterized in that the quantity of feed conveyed on in the feed trough is reduced progressively or stepwise from the beginning of feeding to the end of feeding.

21. Process according to one of claims 1 to 20, characterized in that, after feeding, the feed not consumed by the animals and lying in the feed trough is conveyed on again at least once after a break.

22. Process according to claim 21, characterized in that, after feeding, the feed conveying element of the feed trough is allowed to continue running several times again after a respective break to distribute the feed lying in the feed trough.

23. Animal feeding unit for carrying out the process according to one or more of claims 1 to 22, wherein at least one stationary main conveyor (7) issuing from a stationary feed silo (25) is provided which delivers the feed via downpipes (12) to feed troughs (3) which extend along the animals' eating areas and are designed as feed conveyors with their own conveying elements (5) and own drives (6) and convey the feed to the eating areas, a common controller (23) being provided for the main conveyor (7) and the feed troughs (3), characterized in that the main conveyor (7) is provided with shutoff devices (11) for the downpipes (12) and is designed, at least in its starting portion, as a metering device for metering a quantity adapted to the feed requirement of all animals to be supplied and in that, for metering the quantity of feed to be supplied to a respective feed trough (3) per feeding operation, the drive (8) of the main conveyor (7) and the drives (10) of the shutoff devices (11) are connected to the controller (23) which has an input device (24) for the parameters to be considered during the feeding operation.

24. Unit according to claim 23, characterized in that a portion of the main conveyor (48) is provided with a weighing device (51) connected to the controller (23) for the permanent weighing of the quantity of feed conveyed by the main conveyor (48).

25. Unit according to claim 24, characterized in that the portion of the main conveyor (48) designed as a metering device is provided with the weighing device (51).

26. Unit according to one of claims 23 to 25, characterized in that the controller (23) is programmable.

27. Unit according to one of claims 23 to 26, characterized in that the main conveyor is designed as a stationary pipe conveyor (7) with regulatable conveying rate for the feed to be conveyed, in that feed outlet orifices (9) which open into the downpipes (12) and can be closed by the shutoff devices (11) are provided along the pipe conveyor (7) and in that the controller (23) is connected to the drives (10) of the shutoff devices (11) for opening and closing the feed outlet orifices (9) and to the drive (8) of the pipe conveyor (7) for regulating the conveying rate.

28. Unit according to claim 27, characterized in that the pipe conveyor (7) contains at least one metering screw or metering spiral with a redulatable speed.

29. Animal feeding unit for carrying out the process according to one or more of claims 1 to 22, wherein at least one stationary main conveyer (7) issuing from a stationary feed silo (25) is provided which delivers the feed via downpipes (12) to stationary feed troughs (3) which convey the feed to the eating areas and extend along the animals' eating areas and are designed as stationary feed conveyors with their own conveying elements (5) and own drives (6), a common controller (23) being provided for the stationary main conveyor (7) and the stationary feed troughs (3), characterized in that the stationary main conveyor (7) is provided with shutoff devices (11) for the downpipes (12) and is designed, at least in its starting portion, as a metering device for metering a quantity adapted to the feed requirement of all animals to be supplied in that the stationary feed troughs (3) are designed as metering devices and in that, for metering the quantity of feed to be supplied to each eating area in a respective feed trough (3), the drive (8) of the main conveyor (7) and the drives (10) of the shutoff devices (11) and the drives (6) or the feed troughs (3) are connected to the controller (23).

30. Unit according to claim 29, characterized in that the controller (23) is programmable.

31. Unit according to claim 29 or 30, characterized in that the controller (23) has an input device (24) for the parameters to be considered during the feeding operation.

32. Unit according to claim 29 or 30, characterized in that the controller (23) has a PC for inputting the parameters to be considered during the feeding operation.

33. Unit according to claim 29, characterized in that the main conveyor is designed as a stationary pipe conveyor (7) with a constant conveying rate for the feed to be conveyed, in that feed outlet orifices (9) which open into the downpipes (12) and can be closed by the shutoff devices (11) are provided along the pipe conveyor (7) and in that the controller (23) is connected to the drives (10) of the shutoff devices (11) for opening and closing the feed outlet orifices (9) and to the drives (6) of the feed troughs (3) for regulating the quantity of feed to be conveyed to the eating areas in the respective feed trough (3).

34. Animal feeding unit for carrying out the process according to one or more of claims 1 to 22, wherein a conveyor conveying the feed to the eating areas is provided which comprises at least two stationary component conveyors (16, 17) issuing from a respective stationary feed component silo (13, 14) and at least one stationary feed conveyor (7) which blends the feed components with one another and leads to a feed delivery device (3, 28) distributing the feed to the individual eating areas, characterized in that each component conveyor (16, 17) is designed as a metering device for the continuous metering of the quantity of feed component to be supplied to the feed conveyor (7) for each respective feeding operation, in that the feed conveyor (7) is designed as a stationary main conveyor which is connected to all feed delivery devices (3, 28) via a respective feed outlet orifice (9) which can be closed by a shutoff device (11) and in that, for metering the respective quantity of feed to be supplied to a feed delivery device (3, 28) per feeding operation, the drives (15) of the component conveyors (16, 17) and the drive (8) of the main conveyor (7) as well as each drive (10) of each shutoff device (11) are connected to a controller (23).

35. Unit according to claim 34, characterized in that the main conveyor (48) has a portion which is provided with a weighing device (51) connected to the controller (23) for the permanent weighing of the quantity of feed conveyed by the main conveyor (48).

36. Unit according to claim 35, characterized in that a portion of the main conveyor (48) designed as a metering device is provided with the weighing device (51).

37. Unit according to claim 34, characterized in that each component conveyor (48) has a portion which is provided with a weighing device (51) connected to the controller (23) for the permanent weighing of the quantity of feed conveyed by the component conveyor (48).

38. Unit according to claim 37, characterized in that a portion of the component conveyor (48) designed as a metering device is provided with the weighing device (51).

39. Unit according to one or claims 34 to 38, characterized in that the controller (23) is programmable.

40. Unit according to one of claims 34 to 39, characterized in that the controller (23) has an input device (24) for the parameters to be considered during the feeding operation.

41. Unit according to one of claims 34 to 40, characterized in that the controller (23) has a PC for inputting the parameters to be considered during the feeding operation.

42. Unit according to one of claims 34 to 41, characterized in that the component conveyors (16, 17) are designed as stationary pipe conveyors with an trough conveying rate and in that the controller (23) comprises a speed regulator for each component pipe conveyor (16, 17) for metering the quantity of component to be supplied to the main conveyor (7), the proportion of feed components to one another being regulatable by the controller (23).

43. Unit according to one of claims 34 to 42, characterized in that, for processing a feed component, the respective stationary component conveyor (16, 17) is followed by a processing machine (18, 19) of which the throughput can be regulated by the controller (23) via the speed regulator for the component conveyor (16, 17).

44. Unit according to one of claims 34 to 43, characterized in that each component conveyor (16, 17) contains at least one metering screw or metering spiral of regulatable speed.

45. Unit according to one of claims 34 to 44, characterized in that the feed delivery devices are designed as feed troughs (3) provided with their own delivery elements (5) and own drives (6) which extend along the eating areas and of which the drives (6) are connected to the controller (23) for metering the quantity of feed to be supplied to each eating area in a respective feed trough (3).

46. Unit according to one of claims 26 to 48, characterized in that the main conveyor (7) has downpipes (12) which issue from its feed outlet orifices (9) and open directly and immediately above the conveying elements (5) of the feed troughs (3) into the feed troughs (3), feed only being delivered from the main conveyor (7) when the feed trough (3) is running.

47. Unit according to one of claims 23 to 46, characterized in that feed level sensors (26) connected to the controller (23) are provided in the feed troughs (3) and in that the controller (23) has a timer which, for the respective feed trough (3), delays the delivery of feed from the main conveyor (7) while the feed conveying element (5) of the feed trough (3) is moving until the feed level falls beneath the level provided by the feed level sensor (26).

48. Unit according to one of claims 23 to 47, characterized in that, to improve the supply of the regions of a feed trough (3) furthest removed from the downpipe (12), the controller (23) is provided with a timer which increases the supply of feed to the feed trough (3) at the beginning of feeding and reduces it at the end of feeding while a uniform quantity of feed is allocated to the feed trough (3).

49. Unit according to one of claims 34 to 44, characterized in that the feed delivery device (28) is designed as a feed outlet pipe (29) which adjoins the feed outlet orifice (9), is provided with at least one moving portion (30) and can be moved automatically over the eating areas.

50. Unit according to claim 49, characterized in that the feed outlet pipe (29) has two nesting pipe portions (29a, 29b), one of which is designed as an outlet portion (29b).

51. Unit according to one of claims 23 to 50, characterized in that a temperature probe (27) is connected to the controller (23) for adapting the respectively metered quantities of feed to the animals' feed requirement which varies with changes in temperature.

## Revendications

1. Procédé de fourniture d'aliment à des animaux, l'aliment étant repris dans un silo stationnaire à aliment ou dans plusieurs silos stationnaires à composants d'aliment, et étant transporté vers les mangeoires des animaux au moyen d'un dispositif principal stationnaire de transport, caractérisé en ce que soit l'aiment prévu pour une opération d'alimentation est dosé dans la partie initiale du dispositif principal stationnaire de transport, soit chaque composant de l'aliment est dosé dans un dispositif stationnaire de transport de composant installé en amont du dispositif principal stationnaire de transport, en une quantité déterminée en fonction des besoins alimentaires de tous les animaux à alimenter, pour être transporté vers les mangeoires individuelles sans entreposage intermédiaire.

2. Procédé selon la revendication 1, caractérisé en ce que chacun des composants de l'aliment est tout d'abord dosé individuellement dans son dispositif de transport de composant en fonction de sa proportion dans l'aliment, est ensuite apporté au dispositif principal de transport, les composants étant mélangés dans ce dernier pour fournir l'aliment.

3. Procédé selon les revendications 1 ou 2, caractérisé en ce que chaque composant de l'aliment est dosé dès le début de son dispositif propre de transport de composant.

4. Procédé selon la revendication 3, caractérisé en ce qu'après avoir été dosé, chaque composant de l'aliment à préparer ou à traiter est apporté à une machine de préparation ou à une machine de traitement installée en amont de chaque dispositif de transport de composant.

5. Procédé selon les revendications 3 ou 4, caractérisé en ce que chaque composant de l'aliment est pesé après son dosage.

6. Procédé selon les revendications 3 ou 4, caractérisé en ce que chaque composant de l'aliment est pesé pendant son dosage.

7. Procédé selon les revendications 3 ou 4, caractérisé en ce que les composants de l'aliment déjà dosés sont pesés pendant la poursuite de leur transport.

8. Procédé selon l'une des revendications 1 à 7, caractérisé en ce que l'aliment est dosé à la quantité qui doit être apportée à chaque parcours d'aliment au début d'un parcours stationnaire d'aliment disposé en aval du dispositif principal stationnaire de transport et s'étendant le long des mangeoires des animaux.

9. Procédé selon l'une des revendications 1 à 7, caractérisé en ce que l'aliment est dosé dans le dispositif principal de transport en la quantité qui doit être apportée à chaque parcours d'aliment.

10. Procédé selon la revendication 9, caractérisé en ce qu'au début du parcours d'aliment, l'aliment est dosé à la quantité qui doit être apportée à chaque parcours d'aliment par modification de la vitesse de transport du dispositif principal de transport.

11. Procédé selon l'une des revendications 1 à 9, caractérisé en ce que dès le début du dispositif principal de transport, I'aliment est dosé à la quantité qui doit être apportée à chaque parcours d'aliment.

12. Procédé selon l'une des revendications 8 à 11, caractérisé en ce que dans chaque parcours d'aliment, l'aliment est dosé par modification de la vitesse de transport du parcours d'aiment, en fonction des besoins alimentaires des animaux associés à ce parcours d'aliment.

13. Procédé selon l'une des revendications 1 à 12, caractérisé en ce que l'aliment est pesé après son dosage.

14. Procédé selon l'une des revendications 1 à 12, caractérisé en ce que l'aliment est pesé pendant son dosage.

15. Procédé selon l'une des revendications 1 à 12, caractérisé en ce que l'aliment déjà dosé est pesé pendant la poursuite de son transport.

16. Procédé selon l'une des revendications 1 à 15, caractérisé en ce que l'aliment ou chaque composant de l'aliment n'est transféré au dispositif de transport installé en aval qu'après que l'organe de transport des aliments a été mis en mouvement.

17. Procédé selon l'une des revendications 8 à 16, caractérisé en ce que la partie de la quantité d'aliment qui est dosée pour un parcours de transport et apportée à un parcours de transport au début d'une opération d'alimentation est plus importante qu'à la fin de celle-ci.

18. Procédé selon la revendication 17, caractérisé en ce que la quantité d'aliment apportée par unité de temps à un parcours de transport d'aliment est diminuée progressivement ou par gradins entre le début de l'opération d'alimentation et la fin de cette opération d'alimentation.

19. Procédé selon l'une des revendications 8 à 18, caractérisé en ce que la quantité d'aiment transportée dans un parcours de transport d'aliment est plus grande au début d'une opération d'alimentation qu'à la fin de l'opération d'alimentation.

20. Procédé selon la revendication 19, caractérisé en ce que la quantité d'aliment transportée dans le parcours d'aliment est diminuée progressivement ou par gradins entre le début d'une opération d'alimentation et la fin de cette opération d'alimentation.

21. Procédé selon l'une des revendications 1 à 20, caractérisé en ce qu'après une opération d'alimentation, le transport de l'aliment non repris par les animaux et encore présent dans le parcours d'aliment est repris au moins encore une fois après une pause.

22. Procédé selon la revendication 21, caractérisé en ce qu'après l'opération d'alimentation, on continue à faire fonctionner encore plusieurs fois, chaque fois après une pause, l'organe de transport d'aliment du parcours d'aliment, pour répartir l'aliment présent dans le parcours d'aliment.

23. Installation d'alimentation d'animaux en vue de la réalisation du procédé selon l'une ou plusieurs des revendications 1 à 22, dans laquelle est prévu au moins un dispositif principal stationnaire de transport (7) partant d'un silo stationnaire d'aliment (25), lequel dispositif principal stationnaire de transport délivre l'aliment par des tubes de descente (12) sur les parcours d'aliment (3) qui s'étendent le long des mangeoires des animaux et qui sont configurées comme dispositifs de transport d'aliment dotés de leurs propres organes de transport (5) et de leurs propres entraînements (6), et qui transportent l'aliment vers les mangeoires, un dispositif commun de commande (23) étant prévu pour le dispositif principal de transport (7) et pour les parcours de transport (3), caractérisée en ce que le dispositif principal de transport (7) est doté d'un dispositif de fermeture (11) des tubes de descente (12) et est, au moins dans sa partie initiale, configuré comme dispositif de dosage servant à doser une quantité déterminée en fonction des besoins alimentaires de tous les animaux à alimenter, et en ce que pour le dosage de chaque quantité d'aliment qui doit être apportée à un parcours d'aliment (3) par opération d'alimentation, l'entraînement (8) du dispositif principal de transport (7) et les entraînements (10) des dispositifs de fermeture (11) sont reliés au dispositif de commande (23) qui présente un dispositif d'introduction (24) des paramètres qui doivent être pris en compte pour l'opération d'alimentation.

24. Installation selon la revendication 23, caractérisée en ce qu'une partie du dispositif principal de transport (48) est dotée d'un dispositif de pesée (51) relié au dispositif de commande (23) pour permettre une pesée permanente des quantités d'aliment transportées par le dispositif principal de transport (48).

25. Installation selon la revendication 24, caractérisée en ce que la partie du dispositif principal de transport (48) configurée comme dispositif de dosage est équipée du dispositif de pesée (51).

26. Installation selon l'une des revendications 23 à 25, caractérisée en ce que le dispositif de commande (23) est programmable.

27. Installation selon l'une des revendications 23 à 26, caractérisée en ce que le dispositif principal de transport est configuré comme dispositif tubulaire stationnaire de transport (7) dont la vitesse de transport de l'aliment à transporter est réglable, en ce que le long du dispositif tubulaire de transport (7), il présente des ouvertures de décharge de l'aiment (9) qui débouchent dans les tubes de descente (12) et peuvent être fermées par les dispositifs de fermeture (11), et en ce que le dispositif de commande (23) est relié aux entraînements (10) des dispositifs de fermeture (11), pour ouvrir et fermer les ouvertures de décharge d'aliment (9), et à l'entraînement (8) du dispositif tubulaire de transport (7), pour réguler la vitesse de transport.

28. Installation selon la revendication 27, caractérisée en ce que le dispositif tubulaire de transport (7) contient au moins une vis de dosage ou une spirale de dosage dont la vitesse de rotation est réglable.

29. Installation d'alimentation d'animaux en vue de la réalisation du procédé selon l'une ou plusieurs des revendications 1 à 22, qui présente au moins un dispositif principal stationnaire de transport (7) partant d'un silo stationnaire à aliment (25), lequel dispositif principal stationnaire de transport délivre par des tubes de descente (12) l'aliment aux parcours stationnaires d'aiment (3) qui transportent les aliments vers les mangeoires, et qui s'étendent le long des mangeoires des animaux et sont configurés comme dispositifs stationnaires de transport d'aliment dotés de leurs propres organes de transport (5) et de leurs propres entraînements (6), un dispositif commun de commande (23) étant prévu pour le dispositif principal stationnaire de transport (7) et pour les parcours stationnaires d'aliment (3), caractérisée en ce que le dispositif principal stationnaire de transport (7) est doté de dispositifs de fermeture (11) des tubes de descente (12) et, au moins dans sa partie initiale, est configuré comme dispositif de dosage pour le dosage d'une quantité définie en fonction des besoins alimentaires de tous les animaux à alimenter, en ce que les parcours stationnaires d'aliment (3) sont configurés comme dispositifs de dosage, et en ce que pour le dosage des quantités d'aliment qui doivent être apportées à chaque mangeoire par chaque parcours d'aliment (3), l'entraînement (8) du dispositif principal de transport (7) et les entraînements (10) des dispositifs de fermeture (11) ainsi que les entraînements (6) des parcours d'aliment (3) sont reliés au dispositif de commande (23).

30. Installation selon la revendication 29, caractérisée en ce que le dispositif de commande (23) est programmable.

31. Installation selon les revendications 29 ou 30, caractérisée en ce que le dispositif de commande (23) présente un dispositif d'introduction (24) des paramètres qui doivent être pris en compte pour l'opération d'alimentation.

32. Installation selon les revendications 29 ou 30, caractérisée en ce que le dispositif de commande (23) présente un ordinateur personnel servant à introduire les paramètres qui doivent être pris en compte pour une opération d'alimention.

33. Installation selon la revendication 29, caractérisée en ce que le dispositif principal de transport est configuré comme dispositif tubulaire stationnaire de transport (7) dont la vitesse de transport de l'aliment à transporter est constante, en ce que le long du dispositif tubulaire de transport (7), il présente des ouvertures de décharge de l'aiment (9) qui débouchent dans les tubes de descente (12) et qui peuvent être fermées par les dispositifs de fermeture (11), et en ce que le dispositif de commande (23) est relié aux entraînements (10) des dispositifs de fermeture (11), pour ouvrir et fermer les ouvertures de décharge d'aliment (9), et aux entraînements (6) des parcours de transport (3), pour réguler les quantités d'aiment qui doivent être apportées aux mangeoires par chaque parcours de transport (3).

34. Installation d'alimentation d'animaux en vue de la réalisation du procédé selon l'une ou plusieurs des revendications 1 à 22, dans laquelle est prévu un dispositif de transport qui transporte l'aliment vers les mangeoires et qui comporte au moins deux transporteurs stationnaires de composant (16, 17) partant chacun d'un silo stationnaire de composant de l'aliment (13, 14), et au moins un transporteur stationnaire d'aliment (7) qui mélange les uns avec les autres les composants de l'aliment et qui conduit à un dispositif de fourniture d'aliment (3, 28) répartissant l'aliment entre les mangeoires individuelles, caractérisée en ce que chaque transporteur de composant (16, 17) est configuré comme dispositif de dosage pour le dosage en continu des quantités de chaque composant d'aliment qui doivent être apportées au transporteur d'aliment (7) lors de chaque opération d'alimentation, en ce que le transporteur d'aliment (7) est configuré comme dispositif principal stationnaire de transport qui est relié à tous les dispositifs de fourniture d'aliment (3, 28), chaque fois par une ouverture de décharge d'aliment (9) qui peut être fermée par un dispositif de fermeture (11), et en ce que pour le dosage des quantités de chaque aliment qui doivent être apportées lors d'une opération d'alimentation à un dispositif de fourniture d'aliment (3, 28), les entraînements (15) des transporteurs de composants (16, 17) et l'entraînement (8) du dispositif principal de transport (7), ainsi que chaque entraînement (10) de chaque dispositif de fermeture (11), sont reliés à un dispositif de commande (23).

35. Installation selon la revendication 34, caractérisée en ce que le dispositif principal de transport (48) présente une partie qui est dotée d'un dispositif de pesée (51) relié au dispositif de commande (23), pour la pesée en continu des quantités d'aliment transportées par le dispositif principal de transport (48).

36. Installation selon la revendication 35, caractérisée en ce qu'une partie du dispositif principal de transport (48) configurée comme dispositif de dosage est dotée du dispositif de pesée (51).

37. Installation selon la revendication 34, caractérisée en ce que chaque dispositif de transport de composants (48) présente une partie qui est dotée d'un dispositif de pesée (51) relié au dispositif de commande (23), pour la pesée permanente des quantités d'aliment transportées par le dispositif de transport de composant (48).

38. Installation selon la revendication 37, caractérisée en ce qu'une partie du dispositif de transport de composant (48) configurée comme dispositif de dosage est équipée du dispositif de pesée (51).

39. Installation selon l'une des revendications 34 à 38, caractérisée en ce que le dispositif de commande (23) est programmable.

40. Installation selon l'une des revendications 34 à 39, caractérisée en ce que le dispositif de commande (23) présente un dispositif d'introduction (24) des paramètres qui doivent être pris en compte lors de l'opération d'alimentation.

41. Installation selon l'une des revendications 34 à 40, caractérisée en ce que le dispositif de commande (23) présente un ordinateur personnel servant à introduire les paramètres qui doivent être pris en compte lors de l'opération d'alimentation.

42. Installation selon l'une des revendications 34 à 41, caractérisée en ce que les dispositifs de transport de composant (16, 17) sont configurés comme dispositifs tubulaires stationnaires de transport à vitesse de transport réglable, et en ce que le dispositif de commande (23) comporte une régulation de vitesse de chaque transporteur tubulaire de composants (16, 17), pour le dosage des quantités de composants qui doivent être amenées au dispositif principal de transport (7), et les proportions mutuelles des comportants de l'aliment peuvent être ajustées par le dispositif de commande (23).

43. Installation selon l'une des revendications 34 à 42, caractérisée en ce que pour le traitement d'un composant d'alimentation, une machine de traitement (18, 19) est disposée en aval de chaque transporteur stationnaire de composants (16, 17), les débits de la machine de traitement pouvant être régulés par le dispositif de commande (23) par l'intermédiaire de la régulation de la vitesse de chaque transporteur de composants (16, 17).

44. Installation selon l'une des revendications 34 à 43, caractérisée en ce que chaque dispositif de transport de composant (16, 17) contient au moins une vis de dosage ou spirale de dosage à vitesse réglable.

45. Installation selon l'une des revendications 34 à 44, caractérisée en ce que les dispositifs de fourniture d'aliment sont configurés comme parcours d'aliment (3) dotés de leurs propres organes de transport (5) et de leurs propres entraînements (6) et s'étendant le long des mangeoires, et dont les entraînements (6) sont reliés au dispositif de commande (23), pour le dosage de la quantité de chaque aliment qui doit être amenée à chaque mangeoire dans un parcours d'aiment (3).

46. Installation selon l'une des revendications 26 à 48, caractérisée en ce que le dispositif principal de transport (7) présente des tubes de descente (12) qui partent de ses ouvertures de décharge d'aiment (9) et qui débouchent dans les parcours d'aliment (3) immédiatement au-dessus des organes de transport (5) des parcours d'aiment (3), la fourniture de l'aliment provenant du dispositif principal de transport (7) ne s'effectuant que lorsque le parcours d'aliment (3) est en fonctionnement.

47. Installation selon l'une des revendications 23 à 46, caractérisée en ce que des capteurs de niveau d'aliment (26) reliés au dispositif de commande (23) sont prévus dans les parcours de transport (3), et en ce que le dispositif de commande (23) est doté d'une commande temporisée qui, sur chaque parcours d'aiment (3), ralentit la fourniture d'aliment provenant du dispositif principal de transport (7) lorsque l'organe du transport d'aliment (5) du parcours d'aiment (3) est en mouvement, jusqu'à ce que le niveau d'aliment soit descendu en dessous du niveau prévu par le détecteur de niveau d'aliment (26).

48. Installation selon l'une des revendications 23 à 47, caractérisée en ce que pour permettre une meilleure alimentation des régions d'un parcours d'aliment (3) plus éloignées du tube de descente (12), le dispositif de commande (23) est équipé d'une commande temporisée qui, pour une quantité constante d'aliment transférée dans le parcours d'aliment (3), augmente l'apport d'aliment au parcours d'aliment (3) au début de l'opération d'alimentation et le diminue à la fin de l'opération d'alimentation.

49. Installation selon l'une des revendications 34 à 44, caractérisée en ce que le dispositif de fourniture d'aliment (28) est configuré comme tube de décharge d'aliment (29) se raccordant à l'ouverture de décharge d'aliment (9), doté d'au moins une partie mobile (30) et pouvant se déplacer automatiquement entre les mangeoires.

50. Installation selon la revendication 49, caractérisée en ce que le tube de décharge d'aliment (29) présente deux raccords tubulaires (29a, 29b) pouvant coulisser l'un dans l'autre, dont l'un est configuré comme raccord de décharge (29b).

51. Installation selon l'une des revendications 23 à 50, caractérisée en ce qu'une sonde de température (27) est reliée au dispositif de commande (23) pour adapter chaque quantité dosée d'aliment aux besoins alimentaires des animaux qui se modifient en fonction des variations de température.
